# EUROPEAN PATENT SPECIFICATION

(11) **EP 4 128 829 B1**
(45) Date of publication and mention of the grant of the patent: **13.05.2026**
(21) Application number: 21715504.3
(22) Date of filing: 22.03.2021
(51) Int. Cl.: H04W 4/02

(54) **DEVICE AND METHOD FOR PROVIDING AUGMENTED REALITY INTERACTION**
VORRICHTUNG UND VERFAHREN ZUR BEREITSTELLUNG VON INTERAKTION MIT ERWEITERTER REALITÄT
DISPOSITIF ET PROCÉDÉ PERMETTANT UNE INTERACTION EN RÉALITÉ AUGMENTÉE

(30) Priority: 23.03.2020 CH 3422020; 18.12.2020 CH 16272020
(43) Date of publication of application: 08.02.2023
(73) Proprietor: Mentar Holding AG, 6331 Hünenberg (CH)
(72) Inventor: SPOERRI, Reto, 8050 Zürich (CH)
(74) Representative: Rentsch Partner AG
(86) International application number: PCT/EP2021/057306
(87) International publication number: WO 2021/191162

(56) References cited:
- EP-A1- 3 062 281
- WO-A1-2020/025142
- US-A1- 2012 231 814
- US-A1- 2018 159 838

## Description

### FIELD OF THE INVENTION

The present invention relates to a device and method for providing augmented reality interaction. Specifically, the present invention relates to a device, a method, and a computer program product for providing augmented reality interaction.

### BACKGROUND OF THE INVENTION

Augmented Reality (AR) is a technology for enhancing a real-world environment with virtual computer-generated information. As opposed to virtual reality (VR), AR does not replace the real-world with a computer-generated world, but adds computer-generated information to the real-world, often by overlaying virtual content onto real-world objects. The virtual content can encompass not only visual content (e.g. digital images and models) which are overlaid onto real-world objects, enhancing the visual experience of the real-world, but can also encompass auditory content, haptic content, olfactory content, and content involving other sensory modalities. Additionally, augmented reality can include representations of other users, enabling an interaction between users which goes beyond typical video or telephone conferencing by introducing spatial and contextual aspects to the representation and the interaction.

Communication devices for playing back augmented reality content are plentiful and varied and undergoing constant development. Communication devices can be fixedly installed or carried or worn by a user. These communication devices include holographic projection systems, video conferencing systems, personal computers, as well as mobile communication devices. The communication devices can comprise various sensors and displays, as well as wearable modules, such as headsets with eyepieces, smart-glasses, or the like, which present augmented reality content to the user in addition to real world content. The communication devices may be supported by additional connected devices for augmented reality interaction, such as headphones for auditory content and gloves for providing precise motion tracking and haptic feedback.

For ensuring the privacy of augmented reality interaction, it is essential a given user, or a given server, can control which other users can be interacted with.

For large-scale augmented reality environments, in particular ones involving federated systems, it is not practical or desired to centrally control augmented reality interaction. In particular, this is because for a fluid and natural interaction between the users and the servers, a low latency and high data transmission rates connection becomes critical.

US 2018/01 59838 A1 discloses an augmented reality system that includes an augmented reality user device. The augmented reality user device includes a display for overlaying virtual objects onto tangible objects in a real scene, a camera, and a global position system sensor. The augmented reality user device includes a processor implementing an object recognition engine, a virtual assessment engine, and a virtual overlay engine. The object recognition engine identifies features of a property. The virtual assessment engine generates a property profile based on the identified features and alternative features. The virtual assessment engine identifies the property based on the geographic location of the user, generates a property token that includes the property profile and the location identifier, sends the property token to a server and receives information related to the property, and presents the information as virtual objects overlaid with the real scene.

WO 2020/025142 A1 discloses a way of provisioning applications, for example, augmented reality applications, to a user node automatically or at least semi-automatically based on location of the user node. The user node sends a request comprising location information of the user node to a network node. The network node has mapped geographical coordinates into a plurality of zones. Based on the request comprising the location information, the network node is able to identify one or more zones, and the network node transmits program content provider information associated with the one or more zones to the user node.

### SUMMARY OF THE INVENTION

It is an object of this invention to provide a device and method for providing augmented reality interaction. Specifically, the present invention relates to a device, a method, and a computer program product for providing augmented reality interaction to a user of a communication device.

According to the present invention, these objects are achieved through the features of the independent claims. In addition, further advantageous embodiments follow from the dependent claims and the description.

According to the present invention, the above-mentioned objects are particularly achieved by a communication device, comprising an electronic circuit configured to obtain location information of a first user of the communication device. The location information can relate to a physical location, e.g. a geographic location determined by GPS. The location information can also relate to an emulated location, i.e. a location in the real world or a virtual world which is distinct from the physical location of the user. The communication device is configured to transmit a query request via a communication network to a computerized virtual real estate directory system, the query request comprising at least the location information of the first user. The communication device is configured to receive from the virtual real estate directory system via the communication network a query response, the query response comprising one or more virtual real estate objects assigned to a virtual real estate object location within a predefined region defined by the location information of the first user, each of the virtual real estate objects comprising identification information and a network address of an augmented reality interaction server. The communication device is configured to transmit for at least one particular virtual real estate object an interaction request via the communication network to one of the augmented reality interaction servers, respectively using the network address of the augmented reality interaction server, each interaction request comprising the identification information of the particular virtual real estate object, and receive from the augmented reality interaction server via the communication network access authorization for the particular virtual real estate object. The communication device is configured to transmit first user data to a communication device of a second user, associated with the particular virtual real estate object, via the augmented reality interaction server, and receive second user data from the communication device of the second user via the augmented reality interaction server.

In an embodiment, the communication device is configured to transmit the first user data to the communication device of the second user and receive the second user data from the communication device of the second user, via the augmented reality interaction server, in real time, such that a natural interaction is between the first user and the second user is enabled.

In an embodiment, the electronic circuit is configured to transmit a public user identifier of the first user to the augmented reality interaction server comprising one or more of the following: a public name of the first user or an encryption key of the first user.

In an embodiment, the electronic circuit is configured to receive, from the augmented reality interaction server a public user identifier of the second user comprising one or more of the following: a public name of the second user or an encryption key of the second user.

In an example, the encryption key of the first user is a public key of a public/private key pair generated in the electronic circuit of the communication device of the first user, and the encryption key of the second user is a public key of a public/private key pair generated in the communication device of the second user.

In an embodiment, the electronic circuit is configured to receive. from the augmented reality interaction server, a session key generated in the augmented reality interaction server and encrypted by the augmented reality interaction server using the public key of the first user, which session key is decrypted in the communication device of the first user using a private key of the first user. The electronic circuit is configured to encrypt data transmitted to the augmented reality interaction server using the session key, and to decrypt data received from the augmented reality interaction server using the session key.

In an embodiment, the electronic circuit is configured to encrypt data transmitted to the communication device of the second user, via the augmented reality interaction server, using the public key of the second user. In an embodiment, the electronic circuit is configured to decrypt data received from the communication device of the second user, via the augmented reality interaction server, which data was encrypted using the public key of the first user, using a private key of the first user stored in the communication device of the first user.

In an embodiment, the electronic circuit is configured to digitally sign data transmitted to the augmented reality interaction server or data transmitted to the communication device of the second user via the augmented reality interaction server. In particular, the electronic circuit is configured to sign data to be transmitted using the private key stored in the communication device of the first user, such that the augmented reality server and/or the communication device of the second user are enabled to verify the authenticity of the transmitted data by using the public key of the communication device of the first user.

In an embodiment, the electronic circuit is configured to verify the authenticity of data received from the augmented reality interaction server and/or data received from the communication device of the second user using a public key received from the augmented reality interaction server and/or a public key received from the communication device of the second user, respectively

In an embodiment, the communication device comprises one or more cameras and a rendering system. The electronic circuit is configured to determine visual representation data of the first user using one or more images of the first user captured by the one or more cameras. The electronic circuit is configured to transmit the visual representation data of the first user, included in the first user data, to the communication device of the second user via the augmented reality interaction server, receive, via the augmented reality interaction server, from the communication device of the second user visual representation data of the second user, included in the second user data; and render, using the rendering system and the visual representation data of the second user, augmented reality content comprising a visual representation of the second user.

In an embodiment, the electronic circuit is further configured to determine a field of view of the first user using the one or more cameras, determine from the field of view coordinates of real-world features in the field of view, and render the augmented reality content using the rendering system such that the augmented reality content has a fixed position relative to the coordinates of the real world features.

In an embodiment, the electronic circuit is further configured to verify whether the augmented reality content is entirely contained within a bounding volume of the virtual real estate object responsive to positive verification, render the augmented reality content, and responsive to negative verification to either: not render the augmented reality content, or modify the augmented reality content and render modified augmented reality content fitting within the bounding volume of the virtual real estate object.

In an embodiment, the communication device further comprises a motion tracker and the electronic circuit is further configured to record user motion data related to body motion of the first user using the motion tracker. The electronic circuit is further configured to transmit the user motion data, included in the first user data, to the augmented reality interaction server.

In an embodiment, the communication device further comprises one or more microphones and one or more speakers and the electronic circuit is configured to record audio data of the first user, using the one or more microphones, transmit the audio data of the first user, included in the first user data, to the augmented reality interaction server; receive from the communication device of the second user audio data of the second user, included in the second user data; and play, on the one or more speakers, the audio data of the second user.

In an embodiment, the electronic circuit is further configured to receive an augmented reality object from the augmented reality interaction server and render augmented reality content comprising the augmented reality object using the rendering system. The electronic circuit is configured to determine user interaction data of the first user interacting with the augmented reality object and transmit the user interaction data to the augmented reality interaction server. The electronic circuit is configured to receive an updated augmented reality object from the augmented reality interaction server and render the augmented reality content comprising the updated augmented reality object using the rendering system.

In addition to a communication device, the present invention also relates to a method of interaction in augmented reality for a first user of a communication device having an electronic circuit, the method comprising obtaining location information of the first user of the communication device and transmitting from the communication device a query request via a communication network to a computerized virtual real estate directory system. The query request comprises at least the location information of the first user (2). The method comprises receiving in the communication device from the virtual real estate directory system via the communication network a query response. The query response comprises one or more virtual real estate objects assigned to a virtual real estate object location within a predefined region defined by the location information of the first user. Each of the virtual real estate objects comprises identification information and a network address of an augmented reality interaction server. The method comprises transmitting from the communication device for at least one particular virtual real estate object an interaction request via the communication network to one of the augmented reality interaction servers, respectively using the network address of the augmented reality interaction server, each interaction request comprising the identification information of the particular virtual real estate object. The method comprises receiving in the communication device from the augmented reality interaction server via the communication network access authorization for the particular virtual real estate object. The method comprises transmitting from the communication device first user data to a communication device of a second user, associated with the particular virtual real estate object, via the augmented reality interaction server; and receiving in the communication device second user data from the communication device of the second user via the augmented reality interaction server.

In an embodiment, the method further comprises transmitting from the communication device the first user data to the communication device of the second user and receiving the second user data from the communication device of the second user, via the augmented reality interaction server in real time.

In an embodiment, the method further comprises transmitting, from the communication device of the first user, a public user identifier of the first user to the augmented reality interaction server comprising one or more of the following: a public name of the first user or an encryption key of the first user.

In an embodiment, the method further comprises receiving, in the communication device of the first user, from the augmented reality interaction server a public user identifier of the second user comprising one or more of the following: a public name of the second user or an encryption key of the second user.

In an example, the encryption key of the first user is a public key of a public/private key pair generated in the electronic circuit of the communication device of the first user, and the encryption key of the second user is a public key of a public/private key pair generated in the communication device of the second user.

In an embodiment, the method comprises receiving, in the communication device of the first user, from the augmented reality interaction server, a session key generated in the augmented reality interaction server and encrypted by the augmented reality interaction server using the public key of the first user, which session key is decrypted in the communication device of the first user using a private key of the first user. The electronic circuit is configured to encrypt data transmitted to the augmented reality interaction server using the session key, and to decrypt data received from the augmented reality interaction server using the session key.

In an embodiment, the method comprises encrypting, in the communication device of the first user, data transmitted to the communication device of the second user, via the augmented reality interaction server, using the public key of the second user. In an embodiment, the method comprises decrypting, in the communication device of the first user, data received from the communication device of the second user, via the augmented reality interaction server, which data was encrypted using the public key of the first user, using a private key of the first user stored in the communication device of the first user.

In an embodiment, the method comprises digitally signing data transmitted to the augmented reality interaction server or data transmitted to the communication device of the second user via the augmented reality interaction server. In particular, the method comprises digitally data to be transmitted using the private key stored in the communication device of the first user, such that the augmented reality server and/or the communication device of the second user are enabled to verify the authenticity of the transmitted data by using the public key of the communication device of the first user.

In an embodiment, the method comprises verifying the authenticity of data received from the augmented reality interaction server and/or data received from the communication device of the second user using a public key received from the augmented reality interaction server and/or a public key received from the communication device of the second user, respectively.

In an embodiment, the communication device comprises one or more cameras and a rendering system and the method further comprises determining in the communication device visual representation data of the first user using one or more images of the first user captured by the one or more cameras. The method comprises transmitting from the communication device of the first user the visual representation data of the first user, included in the first user data, to the communication device of the second user via the augmented reality interaction server. The method comprises receiving in the communication device of the first user, from the communication device of the second user, via the augmented reality interaction server, visual representation data of the second user included in the second user data. The method comprises rendering, using the rendering system and the visual representation data of the second user, augmented reality content comprising a visual representation of the second user.

In an embodiment, the method further comprises determining, in the communication device, a field of view of the first user using the one or more cameras. The method comprises determining, in the communication device, from the field of view coordinates of real-world features in the field of view and rendering, using the rendering system, the augmented reality content such that the augmented reality content has a fixed position relative to the coordinates of the real world features. In particular, the coordinates of the augmented reality content, for example coordinates of a center of the augmented reality content, are associated with the coordinates of the real-world features such that if the real-world features move or rotate, the augmented reality content moves or rotates, respectively, with the real world feature to remain at a fixed position and orientation relative to the position and orientation of the real-world feature. This results in a visually coherent and stable augmented reality environment.

In an embodiment, the method further comprises verifying, in the communication device, whether the augmented reality content is entirely contained within a bounding volume of the virtual real estate object. The method comprises rendering the augmented reality content, responsive to positive verification, and responsive to negative verification either not rendering the augmented reality content, or modifying, in the communication device the augmented reality content and rendering modified augmented reality content fitting within the bounding volume of the virtual real estate object.

In an embodiment, the communication device further comprises a motion tracker and the method further comprises recording, in the communication device user motion data related to body motion of the first user using the motion tracker. The method comprises transmitting, from the communication device, the user motion data, included in the first user data, to the augmented reality interaction server.

In an embodiment, the communication device further comprises one or more microphones and one or more speakers and the method comprises recording, in the communication device, audio data of the first user, using the one or more microphones. The method comprises transmitting, from the communication device, the audio data of the first user, included in the first user data, to the augmented reality interaction server. The method comprises receiving, in the communication device, audio data of the second user from the communication device of the second user, included in the second user data and playing, on the one or more speakers, the audio data of the second user.

In an embodiment, the method further comprises receiving, in the communication device an augmented reality object from the augmented reality interaction server, rendering augmented reality content comprising the augmented reality object using the rendering system. The method comprises determining, in the communication device, user interaction data of the first user interacting with the augmented reality object and transmitting, from the communication device the user interaction data to the augmented reality interaction server. The method comprises receiving, in the communication device an updated augmented reality object from the augmented reality interaction server and rendering the augmented reality content comprising the updated augmented reality object using the rendering system.

In addition to a computer device and a method of interaction in augmented reality, the present invention also relates to a computer program product comprising a non-transitory computer-readable medium having stored thereon computer program code configured to control an electronic circuit of a communication device such that the communication device performs the method as described above.

### BRIEF DESCRIPTION OF THE DRAWINGS

The present invention will be explained in more detail, by way of example, with reference to the drawings in which:
- Figure 1:: shows a block diagram illustrating schematically a communication device for providing augmented reality interaction.
- Figure 2:: shows a diagram illustrating schematically a first user with a first communication device, a computerized virtual real estate directory system, augmented reality interaction servers, and the networks lying there between.
- Figure 3:: shows a diagram illustrating schematically a first user with a first communication device, an augmented reality interaction server, a second user with a second communication device, and the networks lying there between.
- Figure 4:: shows a drawing illustrating schematically a plan view with a user in an urban environment comprising virtual real estate objects.
- Figure 5:: shows a drawing illustrating schematically a field of view of a first user in an interior environment comprising a communication device, a visual representation of a second user, and an augmented reality object.
- Figure 6:: shows a block diagram illustrating schematically a virtual real estate directory system.
- Figure 7:: shows a block diagram illustrating schematically an augmented reality interaction server comprising augmented reality objects.
- Figure 8:: shows a flow diagram illustrating a sequence of steps for providing augmented reality interaction.
- Figure 9:: shows a flow diagram illustrating a sequence of steps for rendering a visual representation of a second user.
- Figure 10:: shows a flow diagram illustrating a sequence of steps for rendering an augmented reality object to a first and a second user.
- Figure 11:: shows a flow diagram illustrating modification of augmented reality content.
- Figure 12:: shows a block diagram illustrating modification of augmented reality content.

### DETAILED DESCRIPTION OF THE PREFERRED EMBODIMENTS

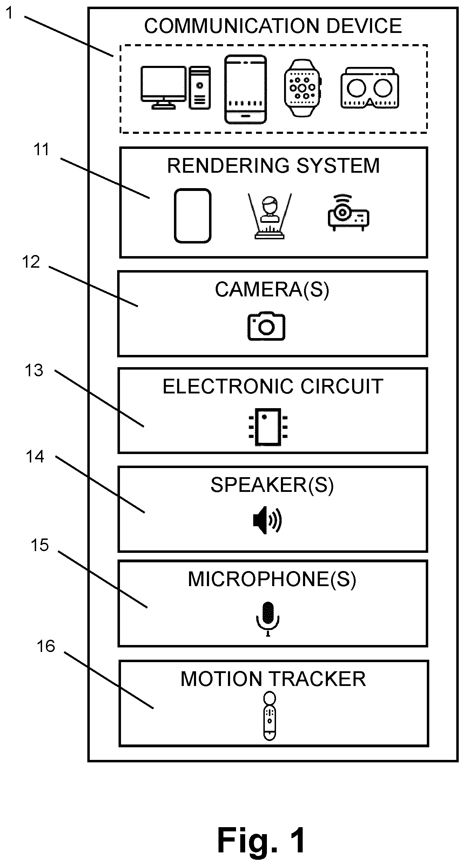

In **Figure 1**, reference numeral 1 refers to a communication device 1 comprising an electronic circuit 13. Depending on the embodiment, the communication device 1 includes various further modules, such as a rendering system 11, one or more cameras 12, one or more speakers 4, one or more microphones 15, a motion tracker 16, a memory, a communication interface, a battery, an orientation module, and/or a user interface. The rendering system 11 is configured to display visual content two-dimensionally and/or three-dimensionally. The rendering system 11 can, depending on the embodiment, comprise a holographic projection system, one or more projectors, and/or a display. The user interface can be integrated into the rendering system 11 in the form of a touch-sensitive display. The communication device 1 can, depending on the embodiment, comprise further modules, such as a GPS module, accelerometer, and an environmental module (for measuring temperature and/or humidity). Further, the communication device 1 can be connected to a building automation system, for example for controlling lights, doors, and/or HVAC systems. The communication device 1 can also be connected to other Internet of things (IoT) devices. The modules of the communication device 1 are connected to each other via a data connection mechanism, such that they can transmit and/or receive data. Alternatively, or in addition, one or more of the modules of the communication device 1 are integrated into the electronic circuit 13. The communication interface of the communication device 1 is configured for wireless communication with remote servers via a communication network 3. The communication network 3 comprises the Internet as well as other intermediary networks. The wireless communication takes place using a mobile data network, such as GSM, CDMA and LTE networks, and/or a close range wireless communication interface using a Wi-Fi network, Bluetooth, and/or other wireless network types and standards. In an embodiment, the communication device 1 further comprises accessory modules, including headphones, displays, such as head-mounted displays and/or smart-glasses, and/or haptic gloves. These accessory modules are configured to exchange data with the communication device 1 via a data connection mechanism.

The term data connection mechanism relates to a mechanism that facilitates data communication between two components, devices, systems, or other entities. In an embodiment, the data connection mechanism is wired, such as a cable or system bus. In an embodiment, the data connection mechanism includes wireless communication, such that some components of the communication device are physically separated from each other and exchange data with each other wirelessly, using a Bluetooth standard, for example.

Depending on the embodiment, the electronic circuit 13 comprises a system on a chip (SoC), a central processing unit (CPU), and/or other more specific processing units such as a graphical processing unit (GPU), application specific integrated circuits (ASICs), reprogrammable processing units such as field programmable gate arrays (FPGAs), as well as processing units specifically configured to accelerating certain applications, such as AI (Artificial Intelligence) accelerators for accelerating neural network and/or machine learning processes.

The memory comprises one or more volatile and or non-volatile storage components. The storage components may be removable and/or non-removable, and can also be integrated, in whole or in part with the communication device 1. Examples of storage components include RAM (Random Access Memory), flash memory, hard disks, data memory, and/or other data stores. The data storage system comprises a non-transitory computer-readable medium having stored thereon computer program code configured to control the electronic circuit 13, such that the communication device 1 performs one or more steps and/or functions as described herein. Depending on the embodiment, the computer program code is compiled or non-compiled program logic and/or machine code. As such, the communication device 1 is configured to perform one or more steps and/or functions. The computer program code defines and/or is part of a discrete software application. One skilled in the art will understand, that the computer program code can also be distributed across a plurality of software applications. In an embodiment, the computer program code further provides interfaces, such as APIs (Application Programming Interfaces), such that functionality and/or data of the mobile communication device 1 can be accessed remotely, such as via a client application or via a web browser. In an embodiment, the computer program code is configured such that one or more steps and/or functions are not performed in the communication device 1 but in a separate computer system, remote from the communication device 1.

In an embodiment, the communication device 1 is a personal computer. The personal computer, for example a laptop running the Windows operating system, is configured to install the computer program code, for example from a portable medium or from a server.

In an embodiment, the communication device 1 is a mobile phone. The mobile phone, for example a smart-phone running the Android operating system or the iOS operating system, is configured to download and install the computer program code from a server, for example from an App store. Further examples of mobile communication devices 1 are tablet computers, smartwatches and the like.

In an embodiment, the one or more speakers 14 are configured to play back auditory content, and comprise an electro-acoustic transducer, such as a loudspeaker or a headphone. The auditory content can be played back by speakers 14 arranged in a mono, stereo, or multichannel configuration. Further, spatial and 3D audio can also be played back, depending on the auditory content and the configuration of the speakers 14.

The orientation module of the communication device 1 captures the orientation of the first user 2 and/or of the communication device 1 and can comprise a compass, accelerometers, gyroscopic sensors, etc.

The user interface enables the first user 2 to interact with the communication device 1. In particular, the user interface enables the first user 2 to enter data into the mobile communication device 1. Examples of the user interface comprise a touch-sensitive display and hardware buttons such as a keyboard. The one or more microphones 15 are configured to capture audio, for example configured for capturing voice commands of the first user 2. In an embodiment, the user interface further uses other modules, such as the one or more cameras 15 and/or the motion tracker 16, for capturing movement and/or gestures of the first user 2 as user input. The motion tracker 16 can include a held or worn device which tracks the motion of the first user 2 or part of the body of the first user 2.

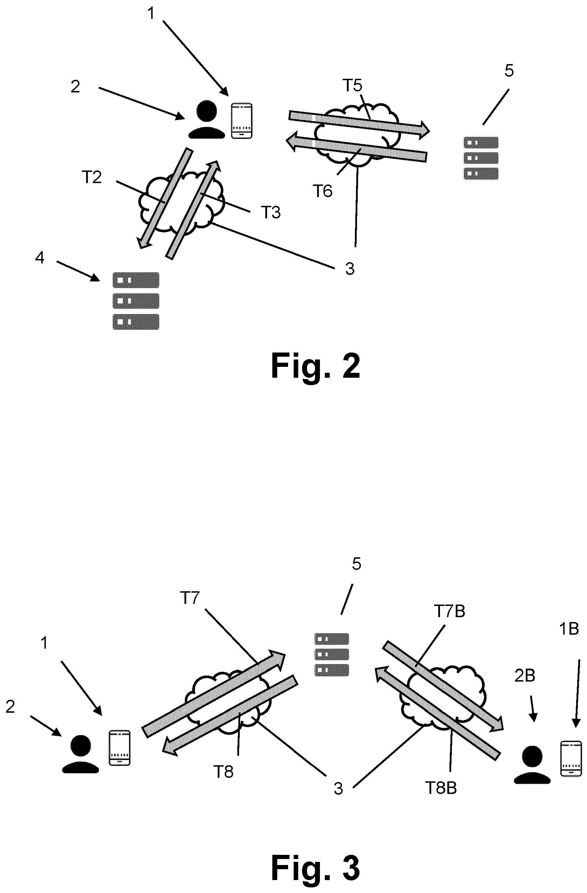

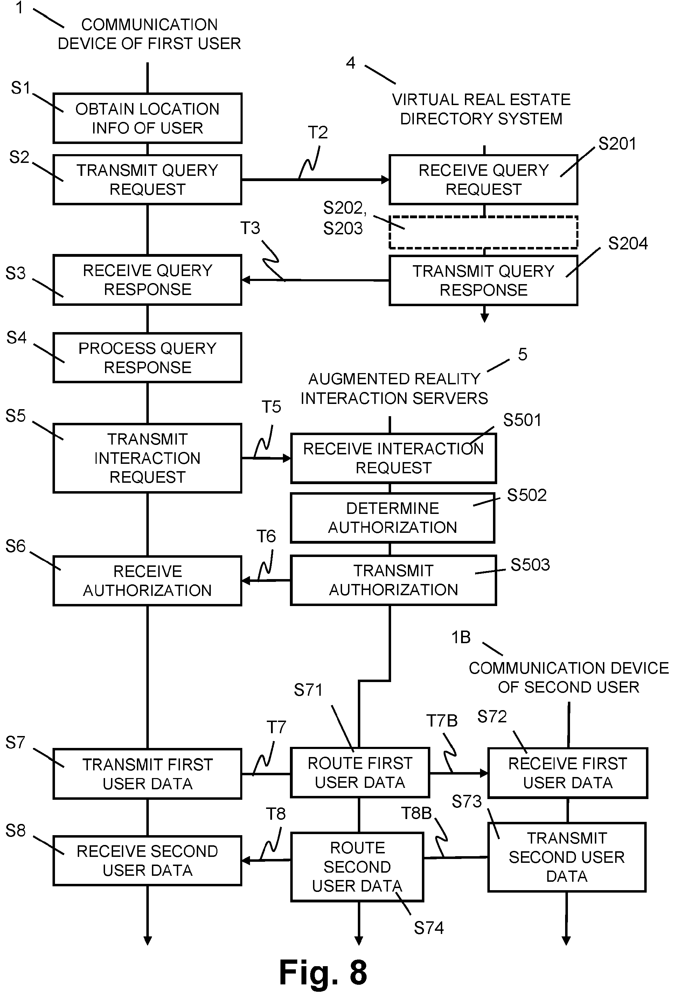

**Figure 2** shows a diagram illustrating schematically the first user 2 with the communication device 1, a computerized virtual real estate directory system 4, augmented reality interaction server 5, and the communication network 3 via which communication takes place between the communication device 1 and the virtual real estate directory system 4, and the communication device 1 and the augmented reality interaction servers 5. Transmissions T2, T3, T5, and S6 are also shown and are explained below in more detail with reference to Figure 8. The first user 2 carries, on his or her person, the communication device 1.

In an embodiment where the communication device 1 is a wearable device, the first user 2 wears the communication device 1, for example as a headpiece or eyepiece. In an embodiment where the communication device 1 is not portable, and is, for example, fixedly installed, the first user 2 is situated near the communication device 1.

By separating the virtual real estate directory system 4 and the augmented reality interaction server 5, the virtual real estate directory system 4 can be configured for quick and efficient determining of virtual real estate objects 41 (not shown). The ownership and governance of the virtual real estate directory system 4 is therefore separated from the ownership and governance of the augmented reality interaction server 5. The virtual real estate directory system 4 provides relatively little data to the communication device 1, whereas the augmented reality interaction server 5 exchanges relatively larger amounts of data with the communication device 1. Therefore, a relatively denser and more local provision of augmented reality interaction servers 5 than servers of the virtual real estate directory system 4 enable an efficient distribution of servers and enable the relatively larger amounts of data to be exchanged via the augmented reality interaction servers 5 to the communication device 1 with lower transmission latency and greater bandwidth, enabling a more natural and responsive interaction. In particular, the augmented reality interaction server 5 is located at a physical location which corresponds to the location of the virtual real estate object. In this way, users physically located at the same location as the augmented reality interaction server 5 benefit from a low latency connection.

**Figure 3** shows a diagram illustrating schematically a first user 2 with a first communication device 1 connected to the augmented reality interaction server 5 via the communication network 3 and a second user 2B with second communication device 1B also connected to the augmented reality interaction server 5 via the communication network 3. Both the first user 2 and the second user 2B are located in the same virtual real estate object 41.

In an embodiment, the first user 2 and the second user 2B are located in different virtual real estate objects 41 which are adjacent or near each other. Transmissions T7, T8, T7B, and T8B are also shown and are explained below in more detail with reference to Figure 8.

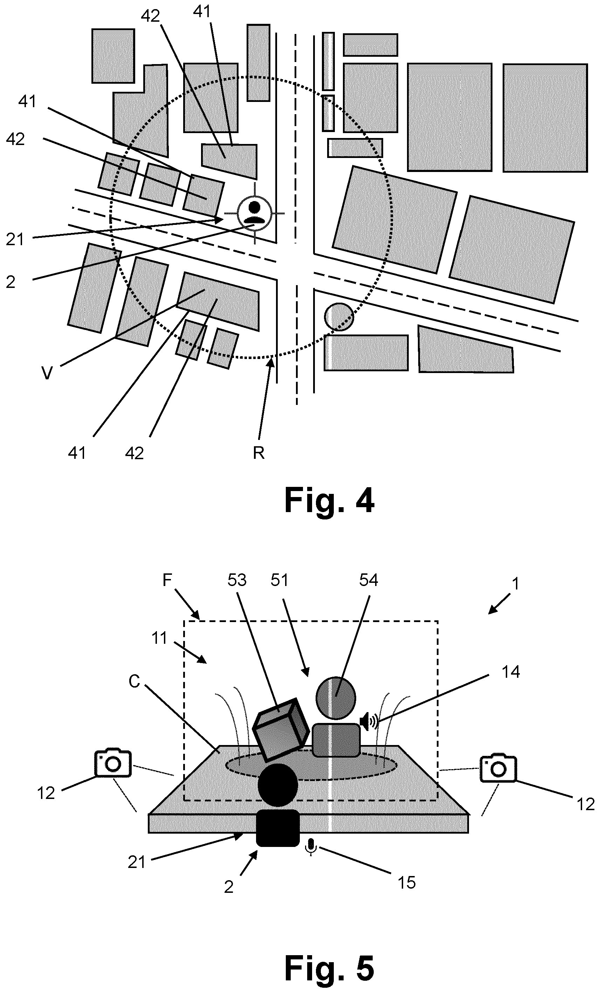

**Figure 4** shows a drawing illustrating schematically a plan view of an urban environment comprising virtual real estate objects 41 and the first user 2 at a location described by location information 21.

In an embodiment, the location information 21 is a physical geographic location of the first user 2 which, for example, is described by coordinates in a coordinate system. For example, the coordinate system is a geographic coordinate system described by spherical coordinates, i.e. latitude and longitude, projected coordinate systems, such as universal transverse Mercator (UTM) or the like. National coordinate systems, such as the Swiss coordinate system, can also be used to describe the location information 21 of the first user 2. In an embodiment, corrections to the location information 21 of the first user 2 are provided to compensate for continental drift.

In an embodiment, the location information 21 relates to an emulated location of the first user 2, meaning that the first user 2 is not actually physically present at that location, but rather a representation of the first user 2 has been placed at the physical location. For example, the first user 2 has selected the representation of the first user 2 to be virtually located at the location 2. For example, the first user 2 may be physically located at their home, while the emulated location information 21 of the first user 2 is located at his or her workplace.

A region R around the first user 2 is defined as a two-dimensional or three-dimensional space in which the first user 2 is located. Depending on the embodiment or configuration, the region R is a geometric object such as a sphere centered on the location as described by the location information 21 of the first user 2, or a rectangle with the first user 2 placed inside. In an embodiment, the region R is defined in terms of a direction in which the first user 2 is oriented, such that the region R extends further from the first user 2 in the direction in which the first user 2 is oriented (e.g. facing and/or looking) than in the directions in which the first user 2 is not oriented.

The real-world space is virtually divided into a hierarchy of virtual real estate objects 41 arranged similarly to a tree data structure, and in which parent virtual real estate objects comprise child virtual real estate objects. The hierarchy comprises a plurality of levels. Virtual real estate objects 41 at higher levels cover larger geographic areas, such as a country, state, or city. Virtual real estate objects 41 at lower levels cover smaller areas, such as city squares, blocks, buildings. At even lower levels, virtual real estate objects 41 cover even smaller spaces such as stories of buildings, shops, individual rooms, and/or individual compartments or shelves in rooms. For the purposes of illustration, a plurality of virtual real estate objects 41 are shown in Figure 4. In one example, the virtual real estate objects 41 are 3D objects defined by a set of polygons, a set of edges and vertices, and/or voxels. In another example, virtual real estate objects 41 are 2D objects described by a set of lines and/or a set of points which define a virtual fence around the virtual real estate object 41.

Each virtual real estate object 41 is assigned a virtual real estate object location 42 in the virtual real estate directory system 4, which associates the virtual real estate object 41 with a real-world location whereby the virtual real estate object location 42 is described by coordinates in a coordinate system. As above for the location information 21 of the first user 2, the coordinate system uses, for example, spherical coordinates or projected coordinates, based on a local or national coordinate system. In an embodiment, the coordinates are further corrected to account for continental drift or other sources of error.

Each virtual real estate object 41 has a bounding volume V which is a closed volume which contains the virtual real estate object 41. The bounding volume V is defined using polygons, vertices and edges, and/or other geometric objects. The bounding volume V being a closed volume means that a given point cannot move from inside the bounding volume V to outside the bounding volume V without passing through a surface of the bounding volume V.

In one example, the bounding volume V exactly matches the shape of the virtual real estate object 41. In another example, the bounding volume V is a relatively simpler shape than the relatively more complex virtual real estate object 41, meaning it is described with less polygons and/or less vertices and edges than the virtual real estate object 41. However, it is ensured that the bounding volume V entirely contains the virtual real estate object 41, e.g. no points of the virtual real estate object 41 lie outside the bounding volume V. In an embodiment, the bounding volume V is a rectangular prism.

**Figure 5** shows a drawing illustrating schematically a field of view F of the first user 2 in an indoor environment. The field of view F is indicated by the dashed lines. The field of view F is defined, for example, by a solid angle with its vertex at the first user 2 or at the communication device 1. Alternatively, the field of view is defined as a rectangular pyramid with a horizontal angle and vertical angle and a vertex at the first user 2. The location of the first user 2 is defined by the location information 21. The first user 2 is situated in front of a table. Multiple cameras 12 capture images of the first user 2 from multiple angles. One or more microphones 15 capture audio data of the first user 2. The rendering system 11 renders augmented reality content 51, which comprises augmented reality content 53 and user data received from users with which the first user 2 is interacting, in particular from the second user 2B. The augmented reality content 51 rendered comprises visual augmented reality content, as well as auditory augmented reality content. The augmented reality content 51 can further comprise other sensory modalities, for example touch, smell, or taste, depending on the capabilities of the particular rendering system 11.

Depending on the embodiment, the user data received comprises a visual representation 54 of the second user 2B rendered by the rendering system 11, and auditory augmented reality content played back by the one or more speakers 14.

In an embodiment, the augmented reality object 53 comprises visual content, e.g. a 3D model described by a set of polygons, along with auditory content, e.g. as described by an audio track. In an embodiment, beyond the 3D model, augmented reality content 51 comprises dynamic content, interactive content with which the first user 2 can interact, and so forth.

The augmented reality content 51 is rendered for the first user 2 using the communication device 1. Depending on the particular hardware configuration of the communication device 1, e.g. which type of device the mobile communication device 1 is, which modules the communication device 1 comprises, and which accessory modules the communication device 1 is connected to, the rendering of the augmented reality content 51 comprises rendering and/or playing back one or more types of sensory content.

The augmented reality content 51 is rendered by the rendering system 11 such that it remains in a fixed position relative to the table. In particular, the cameras 12 extract coordinates C of the environment of the first user 2, for example the table, from the field of view F of the first user 2. The communication device 1 then renders the augmented reality content 51 in the air such that it does not move relative to the real world objects in the environment, such as the table.

In an embodiment, the rendered augmented reality content 51 is anchored to a real world object, for example a feature of the building, such as a floor, wall, or other surface of the building, or for example an item of furniture, such as a table. The augmented reality content 51 is rendered such that it remains in a fixed position relative to the real world object such that even if the first user moves their head or body the augmented reality content 51 will remain in place in the

Using the field of view F, in an embodiment, coordinates C are overlaid onto the real-world, enabling coordinates of real-world objects and features to be extracted from the field of view F. For example, the cameras 12 of the communication device 1 capture the field of view F as one or more images, and the communication device 1 extracts from the one or more images points, edges, and other features of real-world objects, such as corners of buildings, street edges, the horizon, and other persons, and stores these extracted features. The extracted features are used by the communication device 1, for example, to improve a calculated location of the first user 2, improve a determined orientation of the first user 2, and/or improve the positioning and rendering of augmented reality content 51.

In an embodiment, the field of view F is defined using a field of view of the camera 12 of the mobile communication device 1. Additionally, an accelerometer and/or gyroscopic sensor of the communication device 1 are used by the communication device 1 to determine an orientation of the communication device 1. The orientation of the communication device 1 is then used to determine the field of view F.

In an embodiment, the field of view F is defined as the field of view of the first user 2 by determining, using the orientation module of the communication device 1, an orientation of the first user 2, for example a body orientation of the first user 2, a head orientation of the first user 2, and/or an eye orientation of the first user 2. Depending on the embodiment, the orientation module of the communication device 1 comprises a head-tracker, eye-tracker, or other component(s) to detect an orientation of the first user 2.

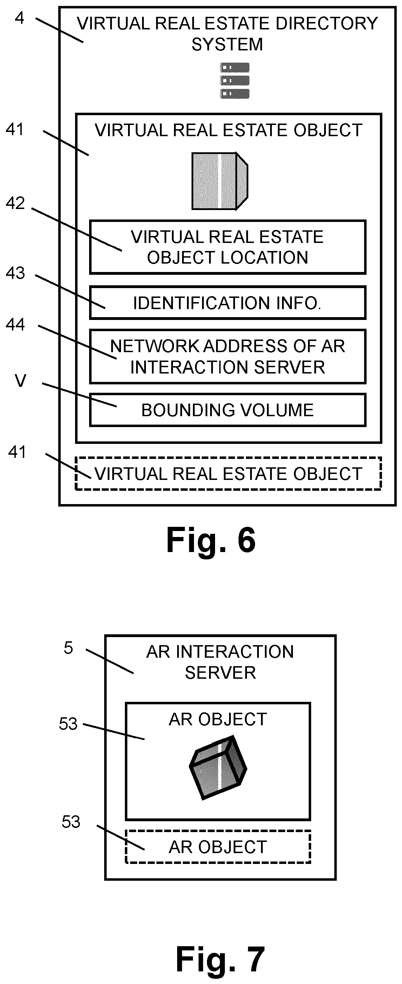

**Figure 6** shows a block diagram illustrating schematically a virtual real estate directory system 4. The virtual real estate directory system 4 is implemented using a server computer system comprising one or more server computers. The server computers of the virtual real estate directory system 4 are located at the same location or are distributed, i.e. located remotely from one another at different locations. The server computers of the virtual real estate directory system 4 comprise one or more processors, memory, and communication interfaces for exchanging data with other systems and/or devices using the communication network 3. For example, the virtual real estate directory system 4 exchanges data with the mobile communication device 1 using the communication network 3. The virtual real estate directory system 4 is implemented on server computers as a hierarchical system and/or hierarchical database which comprise virtual real estate objects 41.

As explained above in relation to Figure 4, the real-world space is virtually divided into a hierarchy of virtual real estate objects 41 with virtual real estate objects 41 at higher levels covering large geographic areas, such as a country, state, or city and virtual real estate objects 41 at lower levels covering smaller areas. The virtual real estate directory system 4 is arranged in a similar hierarchy with one or more high level server computers comprising higher level virtual real estate objects 41, and one or more low level server computers comprising low level virtual real estate objects 41. In an embodiment, the server computers are located in the same location or area as the virtual real estate objects 41 they store. For example, the server computer comprising virtual real estate objects 41 for a specific country is located in that same country, and the server computer comprising virtual real estate objects 41 for a specific city is located in that same city.

The virtual real estate object 41 comprises the virtual real estate object location 42, identification information 43 which uniquely identifies the virtual real estate object 41, a network address of an augmented reality interaction server 44, and the bounding volume V. The identification information 43 comprises at least: an identifier which uniquely identifies the virtual real estate object 41 or a hash value of the virtual real estate object 41. The hash value is generated by hashing the virtual real estate object 41 or one or more components thereof. Additionally, the virtual real estate object 41 comprises information relating to an owner and/or assignee of the virtual real estate object, and 3D content relating to a more complex boundary of the virtual real estate object 41. Depending on its hierarchical level, a given virtual real estate object 41 comprises identification information of child virtual real estate objects 41 which are contained in the given virtual real estate object 41, and identification information of parent virtual real estate objects 41 of which the given virtual real estate object 41 is itself a child virtual real estate object 41. This enables an efficient mapping and traversing of virtual real estate objects 41 in the virtual real estate directory system 4.

In an embodiment, the identification information 43 comprises and/or defines the bounding volume V. In a further embodiment, the identification information 43 comprises one or more of the following: the identifier, the hash value, the bounding volume V, or the virtual real estate object location 42.

**Figure 7** shows a block diagram illustrating schematically an augmented reality interaction server 5 comprising augmented reality objects 53. The augmented reality interaction server 5 comprises one or more server computers. The server computers of the augmented reality interaction server 5 comprise one or more processors, memory, and communication interface for exchanging data with other systems and/or devices using the communication network 3. For example, the augmented reality interaction server 5 exchanges data with the communication device 1 using the communication network 3. The augmented reality interaction server 5 is separate from the virtual real estate directory system 4. For example, the augmented reality interaction server 5 is located near the location to which the virtual real estate object 41 is assigned. The augmented reality interaction 51 comprises sensory content of one or more sensory modalities, as described above in relation to Figure 4.

In an embodiment, the augmented reality interaction server 5 is located at the same location as the virtual real estate directory system 4 and/or is implemented on servers of the virtual real estate directory system 4.

In an embodiment, the augmented reality interaction server 5 hosts one or more augmented reality rooms. In particular, the one or more processors of the augmented reality interaction server 5 are configured to generate one or more augmented reality rooms. The augmented reality rooms are virtual 3D spaces which are configured such that the first user 2 and the second user 2B can join the augmented reality room. In an embodiment, the augmented reality rooms correspond to a physical space, such as one or more of: a premises, a building, an auditorium, or a room. The augmented reality interaction server 5 is configured for secure data exchange such that the first user 2, the second user 2B, and/or further users can exchange data with each other, securely, within a first augmented reality room, without other users in other augmented reality rooms having knowledge of, or access to, any data being exchanged in the augmented reality room.

In a first embodiment, the augmented reality interaction server 5 is configured to generate for the augmented reality room an encryption key.

In a first example, the augmented reality interaction server 5 generates a public/private key pair and transmits the public key to the first user 2 and the second user 2B. The communication device 1 of the first user 2 is configured to receive the public key of the augmented reality room from the augmented reality interaction server 5. The communication device 1 of the first user 2 is configured to transmit a public key of the communication device 1 to the augmented reality room of the augmented reality interaction server 5. The communication device 1 is configured to encrypt data transmitted to the augmented reality room using the public key of the augmented reality room, and configured to decrypt data received from the augmented reality room using a private key of the communication device 1. In such a way, a high level security is provided for data transmitted between the communication device 1 and the augmented reality room. The augmented reality room encrypts data transmitted to the communication device 1 of the first user 2 using the public key of the communication device 1 and encrypts data transmitted to the communication device 1B of the second user 2B using a public key of the communication device 1B of the second user 2B.

In an embodiment, data transmitted from the communication device 1 of the first user 2 to the augmented reality room itself comprises address information comprising one or more of the following: a public name of the second user 2B, one or more public names of further users, or a public flag. The address information is, depending on the embodiment, encrypted with a public encryption key of the augmented reality room. The augmented reality interaction server 5 is configured to forward the data transmitted from the communication device 1 depending on the address information, in particular to forward the data to all users in the augmented reality room if the address information comprises the public flag, or to a set of users according to the list of public names contained in the address information.

Depending on the embodiment, first user data transmitted by the communication device 1 of the first user 2 to the communication device 1B of the second user 2B is encrypted with a public key, or a symmetric session key established between the communication device 1 of the first user 2 and the communication device 1B of the second user 2B, such that the augmented reality room, nor any further users, have access to the unencrypted first user data. The above configurations of the communication between the augmented reality interaction server 5, the first user 1 and the second user 1B ensure a high level of security as data is encrypted end-to-end between the first user 1 and the second user 1B.

In an embodiment, the communication device 1 receives from the augmented reality room the encryption key, the encryption key being securely encrypted using the public key of the communication device 1 which was received in the augmented reality room. The communication device 1 is configured to decrypt the encryption key using the private key of the communication device 1. Subsequently, data transmitted to the augmented reality room by the communication device 1 is encrypted in the communication device 1 using the encryption key. In this embodiment, the encryption key of the augmented reality room acts as a symmetric session key which is securely transmitted to the first user 1, the second user 1B, and further users logged in to the augmented reality room. Further users joining the augmented reality room receive the encryption key from the augmented reality room and are subsequently privy to data of the augmented reality room. This configuration allows for fast and secure data exchange between all participants of the augmented reality room. Simultaneously, the communication device 1 is configured such that it can also perform an end-to-end encrypted data exchange with one or more participants of the augmented reality room.

In an embodiment, the augmented reality room is configured to generate a new encryption key and distribute the new encryption key to the communication device 1 of the first user 2 and the communication device 1B of the second user 2B if a further participant of the augmented reality room leaves the augmented reality room. This ensures continued security of the augmented reality room and data being exchanged therein. In particular, the communication device 1 is configured to receive from the augmented reality interaction server 5 a new encryption key, encrypted with the public key of the communication device 1, to decrypt the new encryption key using the private key stored in the communication device 1, to replace the stored encryption key with the new encryption key, and to encrypt subsequent data transmitted to the augmented reality interaction server 5 using the new encryption key.

**Figure 8** shows a flow diagram illustrating a sequence of steps for providing augmented reality interaction 51 between the first user 2 of the first communication device 1 and the second user 2B of the second communication device 1B.

In step S1, the location information 21 of the first user 2 is obtained. The location information 21 of the first user 2 is obtained by the electronic circuit 13 of the communication device 1. The location information 21 relates to a physical location of the first user 2 or an emulated location of the first user 2. The emulated location of the first user 2 corresponds to a location in the real world which the first user 2 has selected, for example by choosing a location on a map, or a location in the real world to which the first user 2 has been assigned, for example by virtue of belonging to a particular group, for example their company. For example, if the first user 2 is located at their home, the first user 2 can select their workplace has their emulated location, and the location information 21 of the first user 2 relates henceforth relates to their emulated location.

In an embodiment, the location information 21 relates to a physical location of the first user 2 and the location module of the mobile communication device 1 determines the physical location using signal trilateration, for example from a global navigation satellite system such as GPS (Global Positioning System), Glonass, and/or Galileo. In an embodiment, the location module further uses the presence of other radio networks, such as mobile radio or WLAN networks, to determine the physical location of the first user 2, for example by trilateration. In an embodiment, the location module further uses beacons, such as Bluetooth or ultra-wideband beacons for determining the physical location of the first user 2, which is particularly advantageous indoors where a precise determination of the location information 21 of the first user 2 may not be possible using satellite-based systems. The electronic circuit 13 obtains the location from the location module.

In an embodiment, a device separate from the communication device 1 of the first user 2 determines the location information 21 of the first user 2 and transmits the location information 21 to the mobile communication device 2.

In step S2, the communication device 1 transmits in a transmission T2 a query request to the virtual real estate directory system 4 using the communication network 3. The query request comprises the location information 21 of the first user 2. The query request

In an embodiment, the query request further comprises an orientation of the first user 2, a field of view F of the first user 2, a user identifier of the first user 2, a device identifier of the communication device 1, a network address of the communication device 1, a device type of the communication device 1, a hardware configuration of the communication device 1, and/or a movement velocity of the first user 2 of the communication device 1. The field of view F of the first user 2 and the device type of the communication device 1 in particular enable the recipient of the query request to provide a relevant and complete query response to the communication device 1, as is explained below.

In step S201, the query request is received in the virtual real estate directory system 4 from the communication device 1. The query request is received in the server computer system. In particular, the query request is received in a specific server computer of the server computer system.

In step S202, the virtual real estate directory system 4 processes the query request. The query request is processed in the server computer system. Processing the query request comprises the specific server computer of the virtual real estate directory system 4 which received the query request to check whether the query request is to be forwarded to another server computer of the virtual real estate directory system 4. The query request is to be forwarded depending on one or more of the following factors: the physical location to which the location information 21 of the first user 2 relates, the user identifier of the first user 2, the device identifier of the communication device 1, and the network address of the communication device 1. In particular, depending on the location information 21 of the first user 2, the query request is forwarded to one or more further server computers of the virtual real estate directory system 4, which are responsible for the geographic area corresponding to the location information 21 of the first user 2, meaning that they comprise virtual real estate objects 41 assigned to virtual real estate locations 42 in the geographic area indicated by the location information 21 of the first user 2. In an embodiment, forwarding the query request in the virtual real estate directory system 4 comprises one or more individual forwarding steps, where a given receiving server computer forwards the query request to one or more further server computers, which in turn process and forward the query result to other server computers. In this manner, the query request traverses the server computers arranged in the hierarchical system and/or hierarchical database.

In step S203, the virtual real estate directory system 4 generates a query response. The query response comprises virtual real estate objects 41 located near the location defined by the location information 21 (the physical location or the emulated location) of the first user 2. In particular, the query response comprises virtual real estate objects 41 assigned to a virtual real estate location 42 within the region R around the location defined by the location information 21 of the first user 2. In an embodiment, the query response comprises virtual real estate objects 41 located in the field of view F of the first user 1. For example, the query response comprises virtual real estate objects 41 stored on one or more server computers of the virtual real estate directory system 4. In particular, the query response may comprise a plurality of query response messages from a plurality of server computers of the virtual real estate directory system 4, each query response message comprising virtual real estate objects 41 assigned to virtual real estate locations 42 within the region R around the location of the first user 2. For example, a server computer of the virtual real estate directory system 4, responsible for a city, may generate a query response message with large virtual real estate objects 41 corresponding to city blocks, landmarks, and/or natural geographic features, and another server computer of the virtual real estate directory system 4, responsible for a particular building, may generate another query response message with smaller virtual real estate objects 41, corresponding to the particular building along with particular floors, units, and/or areas of the building.

In step S204, the query response is transmitted, in a transmission T3, from the virtual real estate directory system 4 to the communication device 1 via the communication network 3. The query response is transmitted from the server computer system of the virtual real estate directory system 4 and comprises one or more individual query response messages from one or more server computers of the virtual real estate directory system 4.

In step S3, the query response is received in the communication device 1. The query response comprises one or more virtual real estate objects 41. Each virtual real estate object 41 comprises the virtual real estate object location 42, the identification information 43, the network address 44 of the augmented reality interaction server 5, and the bounding volume V.

In an embodiment, at least one of the query request or the query response are encrypted transmissions. In one example, the query request is encrypted by the communication device 1 using a public key of the virtual real estate directory system 4 obtained by the communication device 1. In another example, the query response is encrypted by the virtual real estate directory system 4 using a public key of the communication device 1 obtained by the virtual real estate directory system 4. In another example, the communication device 1 and the virtual real estate directory system 4 establish a secure connection prior to transmission of the query request by the communication device 1, for example using the Secure Sockets Layer (SSL) protocol.

In step S4, the query response is processed and stored in the communication device 1. Depending on the embodiment and/or configuration, processing the query response comprises the communication device 1 using the orientation of the first user 2 and/or the field of view F to generate a sub-set of virtual real estate objects 41 with a virtual real estate object location 42 located in the direction of the orientation of the first user 2 and/or within the field of view F of the first user 2. Furthermore, processing the query response may comprise the communication device 1 using a movement velocity of the first user 2 to generate a sub-set of virtual real estate objects 41 with a virtual real estate object location 42 located in the direction in which the first user 2 is moving.

In an embodiment, the virtual real estate object 41 is displayed using the rendering system 11 of the communication device 1, such that the virtual real estate object 41 appears on the rendering system 11 overlaid over the real-world in a semi-transparent or translucent manner at the virtual real estate object location 42. In an embodiment, this comprises displaying the bounding volume V of the virtual real estate object 41. In particular, when the communication device 1 is situated in an interior environment, the virtual real estate object 41 is displayed around the communication device 1 using the rendering system 11. For example, if the location information 21 of the first user 2 relates to an emulated location, the virtual real estate object 41 can encompass the first user 2.

The communication device 1 generates an interaction request for each virtual real estate object 41 that the communication device 1 received in the query response. In an embodiment, the communication device 1 generates an interaction request only for those virtual real estate objects 41 of the sub-set of virtual real estate objects 41. Each particular interaction request comprises the identification information 43 of the particular virtual real estate object 41. Additionally, each particular interaction request may comprise the user identifier of the first user 2, the device identifier of the communication device 1, the network address of the communication device 1, the device type of the mobile communication device 1, and/or the hardware configuration of the communication device 1.

In step S5, the communication device 1 transmits, in a transmission T5 via the communication network 3, one or more interaction requests to one or more augmented reality interaction servers 5 using the specific network address 44 of each specific augmented reality interaction server 5. Depending on the embodiment and/or scenario, the communication device 1 transmits an interaction requests to each augmented reality interaction server 5. Subsequent steps are described in relation to a single interaction request and a single augmented reality server 5 for the sake of conciseness.

In step S501, the augmented reality interaction server 5 receives the interaction request in a transmission T5. Access authorization is determined for all augmented reality objects 51 within the virtual real estate object 41. Further, access authorization relating to augmented reality interaction between the first user 2 and other users, in particular the second user 2B, is determined. Access authorization for augmented reality interaction ensures that the first user 2 is authorized to interact, in augmented reality, with other users within the virtual real estate object, in particular with a second user 2B. In particular, access authorization for augmented reality interaction comprises authorization for the first user 2 transmitting first user data to, and receiving second user data from, the second user 2B. User data (e.g. first user data and/or second user data) comprises data files stored in, or obtained by, the communication device 1.

In an embodiment, the user data further comprises personal data of the user, as well as visual representation data and/or audio data of the user, as explained in more detail below.

In an embodiment, different augmented reality objects 53 have different access authorization levels, such that the user 2 is granted access authorization to some, but not necessarily all, augmented reality objects 53. Depending on the embodiment, the augmented reality interaction server 5 may receive a separate interaction request from the communication device 1 for each augmented reality object 53.

In step S502, the augmented reality interaction server 5 determines access authorization of the communication device 1 and/or the first user 2 using the interaction request. In particular, the augmented reality interaction server 5 checks whether a hardware identifier of the communication device 1 contained in the interaction request is authorized. Additionally, credentials of the first user 2 contained in the interaction request, such as a user name and a user password, are verified to determine access authorization.

In step S503, the augmented reality interaction server 5 transmits an access authorization confirmation in a transmission T6 to the communication device 1 of the first user 2. In step S6, the communication device 1 receives the access authorization confirmation.

In an embodiment, the steps above related to access authorization are carried out over an encrypted communications channel, for example using SSL encryption. Additionally, a particular augmented reality interaction server 5 may require two factor authentication. In one example, the augmented reality interaction server 5 transmits a confirmation code to a separate user device of the first user 2, the first user 2 being required to enter the confirmation code into the communication device 1, the confirmation code then being transmitted back to the augmented reality interaction server 5, whereupon the augmented reality interaction server 5 determines if the confirmation codes match.

In an embodiment, the communication device 1 is configured to receive from the augmented reality interaction server 5, as part of the authorization of step S6, a user identifier which is dynamically generated by the augmented reality interaction server 5. The user identifier is transmitted by the communication device 1 in subsequent data transmissions to the augmented reality interaction server 5. Depending on the embodiment, the communication device 1 transmits the public name and/or the user identifier of the communication device 1 to the augmented reality interaction server 5.

In an embodiment, the communication device 1 is configured to receive from the augmented reality interaction server 5 a digital certificate, which digital certificate comprises one or more digital credentials of the augmented reality interaction server. The communication device 1 is configured to verify the validity of the digital certificate prior to further communication with the augmented reality interaction server 5.

Subsequent to receiving access authorization, the first user 2 exchanges data with other users who are located in the virtual real estate object 41 via the augmented reality interaction server 5. In particular, as explained below in more detail, the communication device 1 of the first user 2 exchanges first user data with the communication device 1B of the second user 2B via the augmented reality interaction server 5, the second user 2B also being located in the virtual real estate object 41. The communication device 1 thereby enables an exchange of data between the first user 2 and other users who are located, physically or virtually (i.e. a corresponding emulated location) at the virtual real estate object location 42. This enables a group of users located in or near the virtual real estate object 41 to interact in augmented reality.

In an embodiment, subsequent to receiving access authorization, the communication device 1 of the first user 2 receives from the augmented reality interaction server 5 a room list of one or more augmented reality rooms, and can receive along with a room name of a particular augmented reality room a user list of all user currently in the particular augmented reality room. The communication device 1 is configured to enable the first user 2 to select a particular augmented reality room. Upon selection of the particular augmented reality room, the first user 2 performs an exchange of credentials, for example an exchange of public keys or establishing a common session key, with the augmented reality room as described above to increase the security of data exchange with the augmented reality room, in particular with the second user 2B also logged in to the same augmented reality room.

In an embodiment, after being permitted access to the augmented reality room, the communication device 1 of the first user 2 receives one or more of the following: a position, a bounding volume of all other users of the augmented reality room, a list of unoccupied positions in the augmented reality room, or common data of the augmented reality room. The position is a three dimensional position in the augmented reality room of the visual representations of other users, in particular the visual representation 54 of the second user 2B. The bounding volume is a three dimensional volume encompassing the visual representation of the other users, in particular the three dimensional volume encompassing the visual representation 54 of the second user 2B. The list of unoccupied positions comprises one or more positions in three-dimensional space in the augmented reality room, which positions are not occupied by any other user. Common data of the augmented reality room is data which has been provided by the augmented reality room to all participants of the augmented reality room, or data which has been provided by another user of the augmented reality room for all participants of the augmented reality room.

In an embodiment, the first user 2 occupies a particular position in the augmented reality room. More specifically, the visual representation of the first user 2 occupies the particular position in the augmented reality room, and the rendering system 11 of the communication device 1 is configured to render the augmented reality room using a visual perspective of the first user 2. The communication device 1 of the first user 2 is configured to ensure that no other user, in particular visual representation of the other user, occupies the same space as the first user 2. In particular, that the bounding volume of the other user does not overlap the bounding volume of the first user 1. The communication device 1 is configured not to render the visual representation of the other user should such an overlap of bounding volumes occur.

In Step S7, the first user 2 transmits the first user data, in a transmission T7, to the augmented reality interaction server 5. In Step S71, the augmented reality interaction server 5 receives the first user data and routes the first user data to the communication device 1B of the second user 2B in a transmission T7B. Additionally, the augmented reality interaction server 5 can route the first user data to additional users who are also located at in the virtual real estate object 41, either physically or virtually. The communication device 1B of the second user 2B receives the first user data in step S72. The communication device 1B transmits the second user data of the second user 2B to the augmented reality interaction server 5 in a transmission T8B. In step S74, the augmented reality interaction server 5 then routes the second user data to the first user 2 in a transmission T8.

In step S8, the communication device 1 of the first user 2 receives the second user data.

In an embodiment, the second user data is processed using to content filters which are stored in the communication device 1. Additionally, content filtering can also take place in the augmented reality interaction server 5. In particular, the augmented reality interaction server 5 processes received data (i.e. first user data and/or second user data) using content filters, rejecting the received data and not transmitting the received data if it matches one of the filter criteria of the content filter. Content filtering in the augmented reality interaction server 5 ensures that only permitted content is routed via the augmented reality interaction server 5. Content filtering in the communication device 1 ensures that only permitted content is stored in the communication device 1 and rendered and/or played back by the communication device 1.

In an embodiment, the communication device 1 further processes the received second user data according to user settings. User settings include, for example, a language setting. For example, if audio data relating to speech data is contained in the second user data, the electronic circuit 13 of the communication device 1 processes the speech data according to language setting, automatically translating the speech data from a first language of the speech data into a second language according to the language setting, or generating text from the speech data of the audio data.

Therefore, users who are physically located at the virtual real estate object location 42 can interact (e.g. exchange data) with users virtually located at the virtual real estate object location 42 and vice versa. In particular, the location data 21 of the first user 2 corresponds to an emulated location or physical location and the first user 2 can therefore interact with the second user 2B.

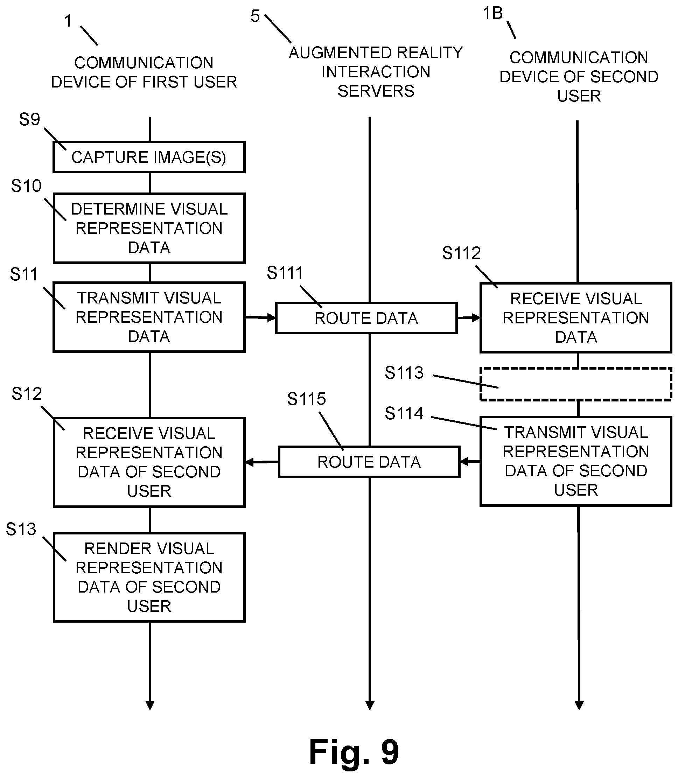

**Figure 9** shows a flow diagram illustrating an exemplary sequence of steps for augmented reality interaction.

In step S9, the communication device 1 of the first user 2, in particular the one or more cameras 12, capture one or more images of the first user 2. The images are 2D or 3D still or video images of the first user 2 and are transmitted from the one or more cameras 12 to the electronic circuit 13 of the communication device 1. In an embodiment, audio data of the first user 2 is recorded using the one or more microphones 15 and transmitted to the electronic circuit of the communication device 1.

In step S10, the electronic circuit determines visual representation data of the first user 2 using the one or more images. The visual representation data is data which is used to render a visual representation of the first user 2. The visual representation data is, in an embodiment, used to generate a life-like 2D or 3D rendering of the first user 2. The visual representation data is, in an embodiment, used to generate an avatar of the first user 2, the avatar being a graphical 2D or 3D representation of the user which is not intended to be lifelike.

Depending on the embodiment, the visual representation data comprises user motion data, relating to the movement of the first user 2; pose data, relating to the position of the body of the first user 2, in particular the face; and/or facial expression data, for example comprising expressions, eye movements, or emotions of the first user 2.

In Step S11, the communication device 1 transmits the visual representation data to the augmented reality interaction server 5 which, in step S111, routes the data to the communication device 1B of the second user 2B. The second user 2B receives the visual representation data of the first user 2 in step S112. The communication device 1B of the second user 2B then renders the visual representation of the first user 2 using the visual representation data. In an embodiment, rendering the visual representation of the first user 2 uses a pre-stored model of the first user 2 stored in the communication device 1B of the second user 2B.

In an embodiment, the audio data of the first user 2 is transmitted to the augmented reality interaction server 5.

In Step S113, the communication device 1B of the second user 2B captures one or more images of the second user 2B and determines visual representation data of the second user 2B. In step S114, the communication device 1B of the second user 2B transmits the visual representation data of the second user 2B to the augmented reality interaction server 5 which routes the data, in step S115, to the communication device 1 of the first user 2. The communication device 1 of the first user 2 receives the visual representation data of the second user 2B in step S12. In step S13, the communication device 1 renders the visual representation 54 of the second user 2B, using the visual representation data and the rendering system 11.

In an embodiment, the communication device 1B also records second user audio data which is transmitted to the augmented reality server 5 and routed, by the augmented reality server 5 to the communication device 1 of the first user 2. The communication device 1 plays back the second user audio data using the one or more speakers 14. Preferably, the speakers 14 play back the second user audio data as if emanating from the visual representation 54 of the second user 2B, for improved realism.

As explained above in relation to Figure 8, the communication device 1 can further process the received data, including the visual representation data and/or the second user audio data according to the user settings.

In an embodiment, rendering the visual representation 54 of the second user 2B uses a pre-stored model of the second user 2B stored in the communication device 1 in conjunction with the visual representation data, in particular the user motion data. Using the user motion data in conjunction with the visual representation data has the advantage that less data must be transmitted, because the user motion data is a compact representation only of the motion of the second user 2B, and does not comprise other details of the visual appearance of the second user 2B.

In an embodiment, the steps described above are carried out continuously such that the visual representation data is continuously streamed from the communication device 1 of the first user 2 to the communication device 2 of the second user 2B, and vice versa. In an embodiment, the streaming occurs in real-time, such that a natural interaction in augmented reality between the first user 2 and the second user 2B is achieved. In an embodiment, this is achieved by arranging the augmented reality interaction server 5 arranged at the virtual real estate object location 42, such that the latency of transmission between the users and the augmented reality interaction server 5 is reduced.

In an embodiment, in addition to visual representation data being exchanged, audio data is also exchanged between the first user 2 and the second user 2B via the augmented reality interaction server 5. In particular, audio data recorded by the one or more microphones 15 is transmitted by the communication device 1 of the first user 1, via the augmented reality interaction server 5 to the communication device 1B of the second user 1B.

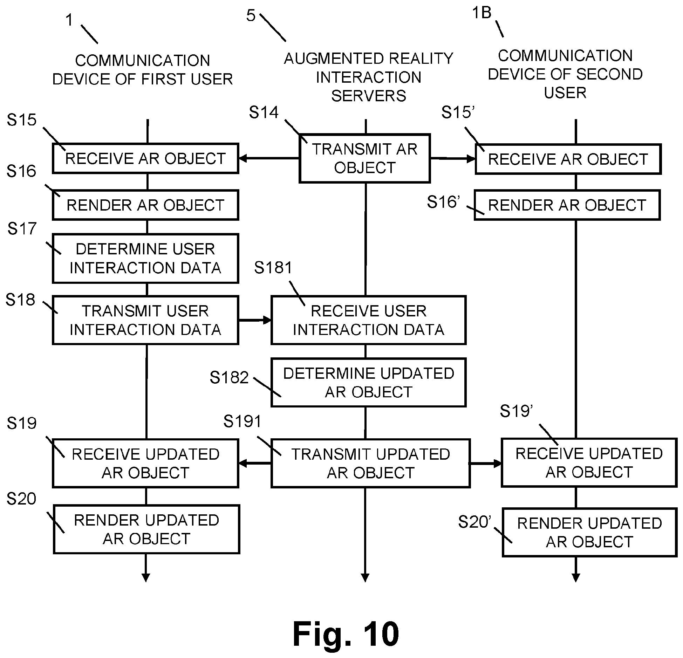

**Figure 10** shows a flow diagram illustrating an exemplary sequence of steps for interacting with an augmented reality object. The sequence of steps enables the first user 2 and the second user 2B to interact with an augmented reality object 53 common to both of them. In particular, the communication device 1 of the first user 2 and the communication device 1B of the second user 2B exchange data with the augmented reality interaction server 5 in a continuous manner such that the augmented reality object 53 is continually updated at both the communication device 1 of the first user 2 and the communication device 1B of the second user 2B.

In step S14, the augmented reality interaction server 5 transmits the augmented reality object 53 to the communication device 1 of the first user 2 and the communication device 2 of the second user 2B. The augmented reality object 53 is a representation of an object which can be rendered in augmented reality, in particularly rendered by the communication device 1. The augmented reality object 53 can encompass one or more sensory modalities, for example visual, haptic, and/or auditory modalities. The augmented reality object 53, for example, comprises a 2D or 3D image (static images and/or moving images), a sound recording, and/or a scent, depending on the embodiment. The 2D image represents, for example, a graphic image, a photograph or a video clip. The 3D image represents, for example, a CAD object, a 3D model, or a topographical map. The augmented reality object 53 comprises, for example, a document, which document consists of text content and/or image content.

In step S15 and step S15', the communication device 1 of the first user 2 and the communication device 1B of the second user 2B receive the augmented reality object 53, respectively.

In an embodiment, in addition to the augmented reality object 53, the identification information 43 of each particular virtual real estate object 41 to which the augmented reality object 53 is assigned is received with the augmented reality object 53. The augmented reality object 53 received is then processed in the communication device 1 by associating the augmented reality object 53 with a specific virtual real estate object 41, in particular by matching the identification information 43 of the specific virtual real estate object 41 as stored (received part of the query response as described above in relation to step S3 of Figure 8) in the communication device 1 with the identification information 43 received.

In an embodiment, the communication device 1 processes the augmented reality object 53 using a set of content filters which are stored in the communication device 1. The content filters are used to determine whether the augmented reality object 53, is accepted or rejected.

In step S16 and step S16', the communication device 1 of the first user 2 and the communication device 1B of the second user 2B render the augmented reality object 53, respectively. In an embodiment, the hardware configuration of the communication device 1 may be used to determine which aspects of the augmented reality object 53 are rendered. In particular, whether the visual, haptic, and/or auditory aspects of the augmented reality object 53 are rendered depends on whether the hardware configuration indicates that the communication device 1 has hardware modules which can render or play back a given content type.

In an embodiment, different content types are encrypted using different encryption keys. In particular, the augmented reality room implemented in the augmented reality interaction server 5 generates a content session key for each content type and securely distributes the content session key to the communication device 1 of the first user 2 and to other participants of the augmented reality room (i.e. communication devices of other participants in the augmented reality room). The communication device 1 is configured to encrypt data transmitted to the augmented reality room using a content session key according to the content type of the data, and to decrypt data received from the augmented reality room using the content session key according to the content type of the data.

In an embodiment, the communication device 1 of the first user 2 renders the augmented reality object 53 according to the user settings, which determine, for example, the size and position of the augmented reality object 53. Thereby the first user 2 can customize the appearance and/or functionality of the augmented reality object 53 according to their requirements, in particular the limitations of the communication device 1, or the space in which the augmented reality content 51 is rendered.

The augmented reality object 53, and more generally all augmented reality content 51, is rendered such that the augmented reality object 53 is located (mapped and arranged) in the virtual real estate object 41. For example, if the augmented reality object 53 comprises visual content, this visual content will appear on the rendering system 11 in the virtual real estate object 41 at the virtual real estate object location 42. In particular, the visual content will be rendered inside the bounding volume V of the virtual real estate object 41. Further, if the augmented reality object 53 comprises auditory content, the auditory content will be played back as if originating from a virtual audio source inside the virtual real estate object 41 at the virtual real estate object location 42, more particularly at a virtual audio source at or inside the augmented reality object 53. Further, the communication device 1 is configured such that only if the location information 21 of the first user 2 is inside the virtual real estate object 41 or its bounding volume V auditory content is played back to the first user 2 using the one or more speakers 14.

In an embodiment where the communication device 1 is a smart phone, the electronic circuit 13 is configured to direct the one or more cameras 12 to capture an image of the real-world and to direct the rendering system 11 to display the image of the real-world. The electronic circuit 13 then renders the image (visual content) of the augmented reality object 53 on the rendering system 11, such that both the real-world and the augmented reality object 53 are displayed simultaneously, with the visual content overlaid on the image of the real-world.

Depending on the embodiment, the augmented reality object 53 is rendered in step S16 using a template augmented reality object stored in the communication device 1 of the first user 1. The template augmented reality object is configured to provide for the communication device 1, in particular the rendering system 11, a framework for rendering the augmented reality object 53. In an embodiment, the template augmented reality object is a member of a particular type of augmented reality object, and the communication device 1 is configured to identify a type of the augmented reality object 53 and render the augmented reality object 53 using the template augmented reality object assigned to that type of augmented reality object. The advantage of using template augmented reality objects is that less data must be transmitted from the augmented reality interaction servers 5 to the communication device 1 for the communication device 1 to render the augmented reality object 1.

In step S17, the communication device 1 of the first user 2 determines user interaction data of the first user 2 with the augmented reality object 53. In particular, user inputs of the first user 2 are recorded by the electronic circuit 13. User inputs comprise user interface inputs, such as entered using a keyboard, gesture inputs registered using the motion tracker 16 and/or the one or more cameras 12 and voice inputs registered using the one or more speakers 14. The user inputs relate to additions and/or modifications of the augmented reality object 53, for example if the augmented reality object 53 represents a text document, the user inputs can relate to additions, deletions, or modifications of the text document. The user interaction data is transmitted by the communication device 1 to the augmented reality interaction server 5 in step S18.

In step S181, the augmented reality interaction server 5 receives the user interaction data. The augmented reality interaction server 5, in an embodiment, also receives user interaction data from other users via their communication devices, in particular user interaction data from the communication device 1B of the second user 2B. In step S182, the augmented reality interaction server 5 determines an updated augmented reality object 53 using the user interaction data. In an embodiment, the augmented reality interaction server 5 determines object update data of the augmented reality object 53. The object update data is configured such that the communication devices of those users which received the augmented reality object 53 are enabled to generate the updated augmented reality object 53. Determining the object update data is advantageous as it relates not to the entire updated augmented reality object 53, but merely to a difference between the augmented reality object 53 and the updated augmented reality object, which typically requires less data to store.

In step S191, the augmented reality interaction server 5 transmits the updated augmented reality object to the communication devices, in particular the communication device 1 of the first user 2 and the communication device 1B of the second user 2B. In an embodiment, instead of the updated augmented reality object, the object update data is transmitted.

In steps s19 and S19' the communication device 1 of the first user 2 and the communication device 1B of the second user 2B receive the updated augmented reality object, respectively. In steps S20 and S20', the communication device 1 of the first user 2 and the communication device 1B of the second user 2B render the updated augmented reality object, respectively. In the embodiment where the object update data was transmitted, the communication device 1 of the first user 2 and the communication device 1B of the second user 2B each receive the object update data and each render the updated augmented reality object using the augmented reality object 53 and the object update data.

The steps described above allow the first user 2 and the second user 2B to both have rendered for them a copy of the same augmented reality object 53. Any user inputs of either of these users with the augmented reality object 53 are registered as user interaction data which is used by the augmented reality interaction server 5 to determine an updated augmented reality object, or object update data thereof. The updated augmented reality object, or object update data relating to the augmented reality object 53, is transmitted to the communication devices of both users. Very frequent updates of the augmented reality object 53 are achieved particularly by use of the object update data, which results in a fluid interaction in real time. This is because the object update data requires less data and therefore smaller data messages are required, reducing the requirements of bandwidth and also decreasing the time between updates. Thereby a coherent and fluid interaction between two users and an augmented reality object is made possible.

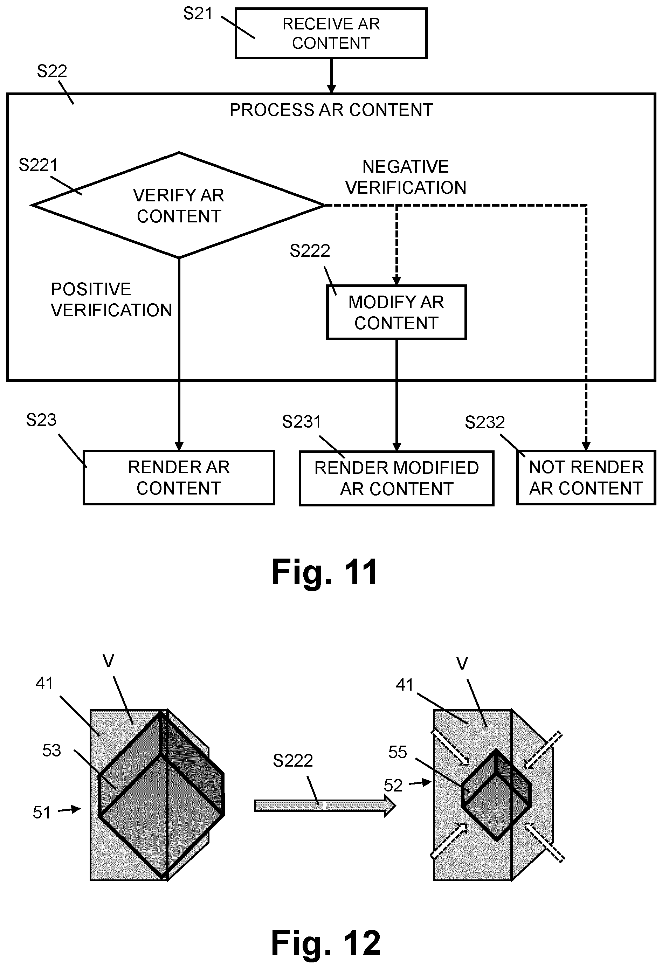

**Figure 11** shows a flow diagram illustrating an exemplary sequence of steps for processing augmented reality content 51 according to an embodiment of the invention. In step S21, the communication device 1 receives augmented reality content 51, which comprises user data (i.e. second user data), representation data of the second user including visual representation data and auditory representation data, and augmented reality objects 53. In step the electronic circuit 13 of the communication device 1 verifies whether the augmented reality content 51 fits inside the bounding volume V of the virtual real estate object. In particular, the electronic circuit 13 verifies that the visual content of the augmented reality content 51 does not extend beyond the bounding volume V. If the visual content, such as a 3D model or image, does not extend beyond the bounding volume V of the virtual real estate object 51, then a positive verification is generated in the electronic circuit 13 and step S23 is executed by the electronic circuit 13. In step S23, the communication device renders the augmented reality content 51, as described for example in step S13 of Figure 9 and step S16 of Figure 10, which relate to the aspects of rendering the visual representation 54 of the second user 2B and rendering the augmented reality object 53, respectively. If the visual content does extend beyond the bounding volume V of the virtual real estate object 51, then a negative verification is generated in the electronic circuit 13 and the electronic circuit proceeds to either step S222 or S232, depending on a configuration of the communication device 1. In step S323, the electronic circuit 13 does not render the augmented reality content 51. In step S222, the augmented reality content 51 is modified such that it fits inside, i.e. does not extend beyond, the bounding volume V of the augmented reality content 51. This modification of the augmented reality content 51 allows the communication device 1 to render the augmented reality content 51 in step S231, without the augmented reality content 51 extending beyond the virtual real estate object 41 and without extending into a neighboring virtual real estate object 41.

**Figure 12** shows a block diagram illustrating modification of augmented reality content 51 according to an embodiment of the invention. The augmented reality content 51, in particular the visual content of the augmented reality content 51, for example the augmented reality object 53, is resized, reshaped, truncated, and/or otherwise modified in step S222, to generated modified augmented reality content 52, in particular a modified augmented reality object 55, which fits inside the bounding volume of the virtual real estate object 41.

It should be noted that, in the description, the sequence of the steps has been presented in a specific order, one skilled in the art will understand, however, that the order of at least some of the steps could be altered, without deviating from the scope of the invention.

## Claims

1. A communication device (1), comprising an electronic circuit (13) configured to:
obtain (S1) location information (21) of a first user (2) of the communication device (1);
transmit (S2) a query request via a communication network (3) to a computerized virtual real estate directory system (4), the query request comprising at least the location information (21) of the first user (2);
receive (S3) from the virtual real estate directory system (4) via the communication network (3) a query response, the query response comprising one or more virtual real estate objects (41) assigned to a virtual real estate object location (42) within a predefined region (R) defined by the location information of the first user (2), each of the virtual real estate objects (41) comprising identification information (43) and a network address (44) of an augmented reality interaction server (5);
transmit (S5) for at least one particular virtual real estate object (41) an interaction request via the communication network (3) to the augmented reality interaction server (5), respectively using the network address (44) of the augmented reality interaction server (5), each interaction request comprising the identification information (43) of the particular virtual real estate object (41);
receive (S6) from the augmented reality interaction server via the communication network (3) access authorization for the particular virtual real estate object (41);
transmit (S7) first user data to a communication device (1B) of a second user (2B), associated with the particular virtual real estate object (41), via the augmented reality interaction server (5); and
receive (S8) second user data from the communication device (1B) of the second user (2B) via the augmented reality interaction server (5).

2. The communication device (1) of claim 1, wherein the electronic circuit (13) is configured to:
transmit a public user identifier of the first user (2) to the augmented reality interaction server (5) comprising one or more of the following: a public name of the first user (2) or an encryption key of the first user (2); and
receive, from the augmented reality interaction server (5) a public user identifier of the second user (2B) comprising one or more of the following: a public name of the second user (2B) or an encryption key of the second user (2B).

3. The communication device (1) of claim 1 or 2, wherein the communication device (1) comprises one or more cameras (12) and a rendering system (11) and wherein the electronic circuit (13) is configured to:
determine (S10) visual representation data of the first user (2) using one or more images of the first user (2) captured by the one or more cameras (12);
transmit (S11) the visual representation data of the first user (2), included in the first user data, to the communication device (1B) of the second user via the augmented reality interaction server (5);
receive (S12), via the augmented reality interaction server (5), from the communication device (1B) of the second user visual representation data of the second user (2B), included in the second user data; and
render (S13), using the rendering system (11) and the visual representation data of the second user (2B), augmented reality content comprising a visual representation (54) of the second user (2B).

4. The communication device (1) of claim 3, wherein the electronic circuit (13) is further configured to:
determine a field of view (F) of the first user (2) using the one or more cameras (12);
determine from the field of view (F) coordinates (C) of real-world features in the field of view (F); and
render (S13) the augmented reality content using the rendering system (11) such that the augmented reality content has a fixed position relative to the coordinates (C) of the real world features.

5. The communication device (1) of one of claims 3 or 4, wherein the electronic circuit (13) is further configured to:
verify (S221) whether the augmented reality content (51) is entirely contained within a bounding volume (V) of the virtual real estate object (41);
responsive to positive verification, render (S23) the augmented reality content (51); and
responsive to negative verification to either:
not render (S232) the augmented reality content (51), or
modify (S222) the augmented reality content (51) and render (S231) modified augmented reality content fitting (52) within the bounding volume (V) of the virtual real estate object (41).

6. The communication device (1) of one of claims 1 to 5, wherein the communication device (1) further comprises a motion tracker (16) and wherein the electronic circuit (13) is further configured to:
record user motion data related to body motion of the first user (2), using the motion tracker (16); and
transmit the user motion data, included in the first user data, to the augmented reality interaction server (5).

7. The communication device (1) of one of claims 1 to 6, wherein the communication device (1) further comprises one or more microphones (15) and one or more speakers (14) and wherein the electronic circuit (13) is configured to:
record audio data of the first user (2), using the one or more microphones (15);
transmit the audio data of the first user (2), included in the first user data, to the augmented reality interaction server (5);
receive from the communication device (1B) of the second user audio data of the second user (2B), included in the second user data; and
play, on the one or more speakers (14), the audio data of the second user (2B).

8. The communication device (1) of one of claims 1 to 7, wherein the electronic circuit (13) is further configured to:
receive (S15) an augmented reality object (52) from the augmented reality interaction server (5);
render (S16) augmented reality content comprising the augmented reality object (52) using the rendering system (11);
determine (S17) user interaction data of the first user (2) interacting with the augmented reality object (51);
transmit (S18) the user interaction data to the augmented reality interaction server (5);
receive (S19) an updated augmented reality object (52) from the augmented reality interaction server (5); and
render (S20) the augmented reality content comprising the updated augmented reality object (52) using the rendering system (11).

9. A method of interaction in augmented reality for a first user (2) of a communication device (1) having an electronic circuit, the method comprising:
obtaining (S1) location information (21) of the first user (2) of the communication device (1);
transmitting (S2) from the communication device (1) a query request via a communication network (3) to a computerized virtual real estate directory system (4), the query request comprising at least the location information (21) of the first user (2);
receiving (S3) in the communication device (1) from the virtual real estate directory system (4) via the communication network (3) a query response, the query response comprising one or more virtual real estate objects (41) assigned to a virtual real estate object location (42) within a predefined region (R) defined by the location information of the first user (2), each of the virtual real estate objects (41) comprising identification information (43) and a network address (44) of an augmented reality interaction server (5);
transmitting (S5) from the communication device (1) for at least one particular virtual real estate object (41) an interaction request via the communication network (3) to the augmented reality interaction server (5), respectively using the network address (44) of the augmented reality interaction server (5), each interaction request comprising the identification information (43) of the particular virtual real estate object (41);
receiving (S6) in the communication device (1) from the augmented reality interaction server via the communication network (3) access authorization for the particular virtual real estate object (41);
transmitting (S7) from the communication device (1) first user data to a communication device (1B) of a second user (2B), associated with the particular virtual real estate object (41), via the augmented reality interaction server (5); and
receiving (S8) in the communication device (1) second user data from the communication device (1B) of the second user (2B) via the augmented reality interaction server (5).

10. The method of claim 9, wherein the method further comprises:
transmitting, from the communication device (1), a public user identifier of the first user (2) to the augmented reality interaction server (5) comprising one or more of the following: a public name of the first user (2) or an encryption key of the first user (2); and
receiving, in the communication device (1), from the augmented reality interaction server (5) a public user identifier of the second user (2B) comprising one or more of the following: a public name of the second user (2B) or an encryption key of the second user (2B).

11. The method of one of claim 9 or 10, wherein the communication device (1) comprises one or more cameras (12) and a rendering system (11) and wherein the method further comprises:
determining (S10) in the communication device (1) visual representation data of the first user (2) using one or more images of the first user (2) captured by the one or more cameras (12);
transmitting (S11) from the communication device (1) of the first user (2) the visual representation data of the first user (2), included in the first user data, to the communication device (1B) of the second user (2B) via the augmented reality interaction server (5);
receiving (S12) in the communication device (1) of the first user (2), from the communication device (1B) of the second user (2B), via the augmented reality interaction server (5), visual representation data of the second user (2B), included in the second user data; and
rendering (S13), using the rendering system (11) and the visual representation data of the second user (2B), augmented reality content comprising a visual representation (54) of the second user (2B).

12. The method of claim 11, wherein the method further comprises:
determining, in the communication device (1), a field of view (F) of the first user (2) using the one or more cameras (12);
determining, in the communication device (1), from the field of view (F) coordinates (C) of real-world features in the field of view (F) relative to a location (21); and
rendering, using the rendering system (11), the augmented reality content such that the augmented reality content has a fixed position relative to the coordinates (C) of the real world features.

13. The method of claim 11 or 12, wherein the method further comprises:
verifying (S221), in the communication device (1), whether the augmented reality content (51) is entirely contained within a bounding volume (V) of the virtual real estate object (41);
responsive to positive verification, rendering (S23) the augmented reality content (51); and
responsive to negative verification either:
not rendering (S232) the augmented reality content (51), or
modifying (S222), in the communication device (1) the augmented reality content (51) and rendering (S231) modified augmented reality content fitting (52) within the bounding volume (V) of the virtual real estate object (41).

14. The method of one of claims 9 to 13, wherein the communication device (1) further comprises a motion tracker (16) and wherein the method further comprises:
recording, in the communication device (1) user motion data related to body motion of the first user (2), using the motion tracker (16); and
transmitting (S8), from the communication device (1), the user motion data, included in the first user data, to the augmented reality interaction server (5).

15. The method of one of claims 9 to 14, wherein the communication device (1) further comprises one or more microphones (15) and one or more speakers (14) and the method comprises:
recording, in the communication device (1), audio data of the first user (2), using the one or more microphones (15);
transmitting (S8), from the communication device (1), the audio data of the first user (2), included in the first user data, to the augmented reality interaction server (5);
receiving (S8), in the communication device (1), from the communication device (1B) of the second user audio data of the second user (2B), included in the second user data; and
playing, on the one or more speakers (14), the audio data of the second user (2B).

16. The method of one of claims 9 to 15, the method further comprising:
Receiving (S15), in the communication device (1) an augmented reality object (52) from the augmented reality interaction server (5);
rendering (S16) augmented reality content comprising the augmented reality object (52) using the rendering system (11);
determining (S17), in the communication device (1), user interaction data of the first user (2) interacting with the augmented reality object (51);
transmitting (S18), from the communication device (1) the user interaction data to the augmented reality interaction server (5);
receiving (S19), in the communication device (1) an updated augmented reality object (52) from the augmented reality interaction server (5); and
rendering (S20) the augmented reality content comprising the updated augmented reality object (52) using the rendering system (11).

17. A computer program product comprising a non-transitory computer-readable medium having stored thereon computer program code configured to control an electronic circuit (13) of a communication device (1) such that the communication device (1) performs the steps according to the method of one of claims 9 to 16.

## Patentansprüche

1. Kommunikationsgerät (1), das eine elektronische Schaltung (13) umfasst, die konfiguriert ist zum:
Erfassen (S1) von Standortinformationen (21) eines ersten Benutzers (2) des Kommunikationsgeräts (1);
Senden (S2) einer Abfrageanforderung über ein Kommunikationsnetzwerk (3) an ein computergestütztes virtuelles Immobilienverzeichnis (4), wobei die Abfrageanforderung mindestens die Standortinformationen (21) des ersten Benutzers (2) umfasst;
Empfangen (S3) einer Abfrageantwort vom virtuellen Immobilienverzeichnis (4) über das Kommunikationsnetzwerk (3), wobei die Abfrageantwort ein oder mehrere virtuelle Immobilienobjekte (41) umfasst, die einem virtuellen Immobilienobjektstandort (42) innerhalb einer vordefinierten Region (R) zugeordnet sind, die durch die Standortinformationen des ersten Benutzers (2) definiert ist, wobei jedes der virtuellen Immobilienobjekte (41) Identifikationsinformationen (43) und eine Netzwerkadresse (44) eines Augmented-Reality-Interaktionsservers (5) umfasst;
Senden (S5) einer Interaktionsanfrage für mindestens ein bestimmtes virtuelles Immobilienobjekt (41) über das Kommunikationsnetzwerk (3) an den Augmented-Reality-Interaktionsserver (5), jeweils unter Verwendung der Netzwerkadresse (44) des Augmented-Reality-Interaktionsservers (5), wobei jede Interaktionsanfrage die Identifikationsinformationen (43) des bestimmten virtuellen Immobilienobjekts (41) umfasst;
Empfangen (S6) einer Zugriffsberechtigung für das bestimmte virtuelle Immobilienobjekt (41) vom Augmented-Reality-Interaktionsserver über das Kommunikationsnetzwerk (3);
Senden (S7) von Daten des ersten Benutzers an ein Kommunikationsgerät (1B) eines zweiten Benutzers (2B), das dem bestimmten virtuellen Immobilienobjekt (41) zugeordnet ist, über den Augmented-Reality-Interaktionsserver (5); und
Empfangen (S8) von Daten des zweiten Benutzers von dem Kommunikationsgerät (1B) des zweiten Benutzers (2B) über den Augmented-Reality-Interaktionsserver (5).

2. Kommunikationsgerät (1) nach Anspruch 1, wobei die elektronische Schaltung (13) konfiguriert ist zum:
Übertragen einer öffentlichen Benutzerkennung des ersten Benutzers (2) an den Augmented-Reality-Interaktionsserver (5), die eines oder mehrere der folgenden umfasst: einen öffentlichen Namen des ersten Benutzers (2) oder einen Verschlüsselungsschlüssel des ersten Benutzers (2); und
Empfangen einer öffentlichen Benutzerkennung des zweiten Benutzers (2B) vom Augmented-Reality-Interaktionsserver (5), die eines oder mehrere der folgenden umfasst: einen öffentlichen Namen des zweiten Benutzers (2B) oder einen Verschlüsselungsschlüssel des zweiten Benutzers (2B).

3. Das Kommunikationsgerät (1) nach Anspruch 1 oder 2, wobei das Kommunikationsgerät (1) eine oder mehrere Kameras (12) und ein Rendering-System (11) umfasst und wobei die elektronische Schaltung (13) konfiguriert ist zum:
Ermitteln (S10) von visuellen Darstellungsdaten des ersten Benutzers (2) unter Verwendung eines oder mehrerer Bilder des ersten Benutzers (2), die von der einen oder den mehreren Kameras (12) aufgenommen wurden;
Übertragen (S11) der visuellen Darstellungsdaten des ersten Benutzers (2), die in den Daten des ersten Benutzers enthalten sind, über den Augmented-Reality-Interaktionsserver (5) an das Kommunikationsgerät (1B) des zweiten Benutzers;
Empfangen (S12) von visuellen Darstellungsdaten des zweiten Benutzers (2B), die in den Daten des zweiten Benutzers enthalten sind, über den Augmented-Reality-Interaktionsserver (5) vom Kommunikationsgerät (1B) des zweiten Benutzers; und
Rendern (S13) von Augmented-Reality-Inhalten, die eine visuelle Darstellung (54) des zweiten Benutzers (2B) umfassen, unter Verwendung des Rendering-Systems (11) und der visuellen Darstellungsdaten des zweiten Benutzers (2B).

4. Das Kommunikationsgerät (1) nach Anspruch 3, wobei die elektronische Schaltung (13) ferner konfiguriert ist zum:
Bestimmen eines Sichtfelds (F) des ersten Benutzers (2) unter Verwendung der einen oder mehreren Kameras (12);
Bestimmen von Koordinaten (C) von Merkmalen der realen Welt im Sichtfeld (F) aus dem Sichtfeld (F); und
Rendern (S13) der Augmented-Reality-Inhalte unter Verwendung des Rendering-Systems (11), so dass die Augmented-Reality-Inhalte eine feste Position relativ zu den Koordinaten (C) der realen Merkmale einnehmen.

5. Das Kommunikationsgerät (1) nach einem der Ansprüche 3 oder 4, wobei die elektronische Schaltung (13) ferner konfiguriert ist zum:
Überprüfen (S221), ob der Augmented-Reality-Inhalt (51) vollständig innerhalb eines Begrenzungsvolumens (V) des virtuellen Immobilienobjekts (41) enthalten ist;
als Reaktion auf eine positive Überprüfung, Rendern (S23) des Augmented-Reality-Inhalts (51); und
als Reaktion auf eine negative Überprüfung entweder:
Nicht-Rendern (S232) des Augmented-Reality-Inhalts (51) oder
Modifizieren (S222) des Augmented-Reality-Inhalts (51) und Rendern (S231) des modifizierten Augmented-Reality-Inhalts (52), der er in das Begrenzungsvolumen (V) des virtuellen Immobilienobjekts (41) passt.

6. Das Kommunikationsgerät (1) nach einem der Ansprüche 1 bis 5, wobei das Kommunikationsgerät (1) ferner einen Bewegungssensor (16) umfasst und wobei die elektronische Schaltung (13) ferner konfiguriert ist zum:
Erfassen von Bewegungsdaten des ersten Benutzers (2) in Bezug auf dessen Körperbewegungen unter Verwendung des Bewegungssensors (16); und
Übertragen der in den Daten des ersten Benutzers enthaltenen Benutzerbewegungsdaten an den Augmented-Reality-Interaktionsserver (5).

7. Kommunikationsvorrichtung (1) nach einem der Ansprüche 1 bis 6, wobei die Kommunikationsvorrichtung (1) ferner ein oder mehrere Mikrofone (15) und einen oder mehrere Lautsprecher (14) umfasst und wobei die elektronische Schaltung (13) konfiguriert ist zum:
Aufzeichnen von Audiodaten des ersten Benutzers (2) unter Verwendung des einen oder der mehreren Mikrofone (15);
Übertragen der Audiodaten des ersten Benutzers (2), die in den Daten des ersten Benutzers enthalten sind, an den Augmented-Reality-Interaktionsserver (5);
Empfangen von Audiodaten des zweiten Benutzers (2B), die in den Daten des zweiten Benutzers enthalten sind, von der Kommunikationsvorrichtung (1B) des zweiten Benutzers; und
Wiedergabe der Audiodaten des zweiten Benutzers (2B) über den einen oder die mehreren Lautsprecher (14).

8. Kommunikationsgerät (1) nach einem der Ansprüche 1 bis 7, wobei die elektronische Schaltung (13) ferner konfiguriert ist zum:
Empfangen (S15) eines Augmented-Reality-Objekts (52) vom Augmented-Reality-Interaktionsserver (5);
Rendern (S16) von Augmented-Reality-Inhalten, die das Augmented-Reality-Objekt (52) umfassen, unter Verwendung des Rendering-Systems (11);
Ermitteln (S17) von Benutzerinteraktionsdaten des ersten Benutzers (2), der mit dem Augmented-Reality-Objekt (51) interagiert;
Übertragen (S18) der Benutzerinteraktionsdaten an den Augmented-Reality-Interaktionsserver (5);
Empfangen (S19) eines aktualisierten Augmented-Reality-Objekts (52) vom Augmented-Reality-Interaktionsserver (5); und
Rendern (S20) des Augmented-Reality-Inhalts, der das aktualisierte Augmented-Reality-Objekt (52) umfasst, unter Verwendung des Rendering-Systems (11).

9. Verfahren zur Interaktion in Augmented Reality für einen ersten Benutzer (2) eines Kommunikationsgeräts (1) mit einer elektronischen Schaltung, wobei das Verfahren umfasst:
Erfassen (S1) von Standortinformationen (21) des ersten Benutzers (2) des Kommunikationsgeräts (1);
Senden (S2) einer Abfrageanforderung vom Kommunikationsgerät (1) über ein Kommunikationsnetzwerk (3) an ein computergestütztes virtuelles Immobilienverzeichnis (4), wobei die Abfrageanforderung mindestens die Standortinformationen (21) des ersten Benutzers (2) umfasst;
Empfangen (S3) einer Abfrageantwort im Kommunikationsgerät (1) vom virtuellen Immobilienverzeichnis (4) über das Kommunikationsnetzwerk (3), wobei die Abfrageantwort ein oder mehrere virtuelle Immobilienobjekte (41) umfasst, die einem virtuelle Immobilienobjektstandort (42) innerhalb einer vordefinierten Region (R) zugeordnet sind, die durch die Standortinformationen des ersten Benutzers (2) definiert ist, wobei jedes der virtuellen Immobilienobjekte (41) Identifikationsinformationen (43) und eine Netzwerkadresse (44) eines Augmented-Reality-Interaktionsservers (5) umfasst;
Senden (S5) einer Interaktionsanfrage für mindestens ein bestimmtes virtuelles Immobilienobjekt (41) von dem Kommunikationsgerät (1) über das Kommunikationsnetzwerk (3) an den Augmented-Reality-Interaktionsserver (5),
jeweils unter Verwendung der Netzwerkadresse (44) des Augmented-Reality-Interaktionsservers (5), wobei jede Interaktionssanfrage die Identifikationsinformationen (43) des bestimmten virtuellen Immobilienobjekts (41) umfasst;
Empfangen (S6) einer Zugriffsberechtigung für das bestimmte virtuelle Immobilienobjekt (41) im Kommunikationsgerät (1) vom Augmented-Reality-Interaktionsserver über das Kommunikationsnetzwerk (3);
Senden (S7) von Daten des ersten Benutzers vom Kommunikationsgerät (1) an ein Kommunikationsgerät (1B) eines zweiten Benutzers (2B), das dem jeweiligen virtuellen Immobilienobjekt (41) zugeordnet ist, über den Augmented-Reality-Interaktionsserver (5); und
Empfangen (S8) von Daten des zweiten Benutzers in dem Kommunikationsgerät (1) von dem Kommunikationsgerät (1B) des zweiten Benutzers (2B) über den Augmented-Reality-Interaktionsserver (5).

10. Verfahren nach Anspruch 9, wobei das Verfahren ferner umfasst:
Senden einer öffentlichen Benutzerkennung des ersten Benutzers (2) vom Kommunikationsgerät (1) an den Augmented-Reality-Interaktionsserver (5), wobei diese eine oder mehrere der folgenden umfasst: einen öffentlichen Namen des ersten Benutzers (2) oder einen Verschlüsselungsschlüssel des ersten Benutzers (2); und
Empfangen einer öffentlichen Benutzerkennung des zweiten Benutzers (2B) im Kommunikationsgerät (1) vom Augmented-Reality-Interaktionsserver (5), wobei die öffentliche Benutzerkennung eines oder mehrere der folgenden umfasst: einen öffentlichen Namen des zweiten Benutzers (2B) oder einen Verschlüsselungsschlüssel des zweiten Benutzers (2B).

11. Verfahren nach Anspruch 9 oder 10, wobei das Kommunikationsgerät (1) eine oder mehrere Kameras (12) und ein Rendering-System (11) umfasst und wobei das Verfahren ferner umfasst:
Ermitteln (S10) von visuellen Darstellungsdaten des ersten Benutzers (2) in dem Kommunikationsgerät (1) unter Verwendung eines oder mehrerer Bilder des ersten Benutzers (2), die von der einen oder den mehreren Kameras (12) aufgenommen wurden;
Übertragen (S11) der in den Daten des ersten Benutzers enthaltenen visuellen Darstellungsdaten des ersten Benutzers (2) von dem Kommunikationsgerät (1) des ersten Benutzers (2) an das Kommunikationsgerät (1 B) des zweiten Benutzers (2B) über den Augmented-Reality-Interaktionsserver (5);
Empfangen (S12) von den in den Daten des zweiten Benutzers enthaltenen visuellen Darstellungsdaten des zweiten Benutzers (2B) in dem Kommunikationsgerät (1) des ersten Benutzers (2) von dem Kommunikationsgerät (1B) des zweiten Benutzers (2B) über den Augmented-Reality-Interaktionsserver (5); und
Darstellen (S13) von Augmented-Reality-Inhalten, die eine visuelle Darstellung (54) des zweiten Benutzers (2B) umfassen, unter Verwendung des Rendering-Systems (11) und der visuellen Darstellungsdaten des zweiten Benutzers (2B).

12. Verfahren nach Anspruch 11, wobei das Verfahren ferner umfasst:
Bestimmen eines Sichtfelds (F) des ersten Benutzers (2) in dem Kommunikationsgerät (1) unter Verwendung der einen oder mehreren Kameras (12);
Bestimmen von Koordinaten (C) von Merkmalen der realen Welt im Sichtfeld (F) relativ zu einem Standort (21) in dem Kommunikationsgerät (1) anhand des Sichtfelds (F); und
Rendern des Augmented-Reality-Inhalts unter Verwendung des Rendering-Systems (11) derart, dass der Augmented-Reality-Inhalt eine feste Position relativ zu den Koordinaten (C) der realen Merkmale aufweist.

13. Verfahren nach Anspruch 11 oder 12, wobei das Verfahren ferner umfasst:
Überprüfen (S221) in dem Kommunikationsgerät (1), ob der Augmented-Reality-Inhalt (51) vollständig in einem Begrenzungsvolumen (V) des virtuellen Immobilienobjekts (41) enthalten ist;
als Reaktion auf eine positive Überprüfung das Rendern (S23) des Augmented-Reality-Inhalts (51); und
als Reaktion auf eine negative Überprüfung entweder:
Nicht-Rendern (S232) des Augmented-Reality-Inhalts (51) oder
Modifizieren (S222) des Augmented-Reality-Inhalts (51) in dem Kommunikationsgerät (1) und Rendern (S231) des modifizierten Augmented-Reality-Inhalts (52), der in das Begrenzungsvolumen (V) des virtuellen Immobilienobjekts (41) passt.

14. Verfahren nach einem der Ansprüche 9 bis 13, wobei das Kommunikationsgerät (1) ferner einen Bewegungssensor (16) umfasst und wobei das Verfahren ferner umfasst:
Aufzeichnen von Benutzerbewegungsdaten, die sich auf die Körperbewegung des ersten Benutzers (2) beziehen, in dem Kommunikationsgerät (1) unter Verwendung des Bewegungssensors (16); und
Senden (S8) der in den Daten des ersten Benutzers enthaltenen Benutzerbewegungsdaten von dem Kommunikationsgerät (1) an den Augmented-Reality-Interaktionsserver (5).

15. Verfahren nach einem der Ansprüche 9 bis 14, wobei das Kommunikationsgerät (1) ferner ein oder mehrere Mikrofone (15) und einen oder mehrere Lautsprecher (14) umfasst und das Verfahren umfasst:
Aufzeichnen von Audiodaten des ersten Benutzers (2) in dem Kommunikationsgerät (1) unter Verwendung des einen oder der mehreren Mikrofone (15);
Senden (S8) der in den Daten des ersten Benutzers enthaltenen Audiodaten des ersten Benutzers (2) von dem Kommunikationsgerät (1) an den Augmented-Reality-Interaktionsserver (5);
Empfangen (S8) von Audiodaten des zweiten Benutzers (2B), die in den Daten des zweiten Benutzers enthalten sind, in dem Kommunikationsgerät (1) von dem Kommunikationsgerät (1B) des zweiten Benutzers; und
Wiedergabe der Audiodaten des zweiten Benutzers (2B) über den einen oder die mehreren Lautsprecher (14).

16. Verfahren nach einem der Ansprüche 9 bis 15, wobei das Verfahren ferner umfasst:
Empfangen (S15) eines Augmented-Reality-Objekts (52) vom Augmented-Reality-Interaktionsserver (5) in dem Kommunikationsgerät (1);
Rendern (S16) von Augmented-Reality-Inhalten, die das Augmented-Reality-Objekt (52) umfassen, unter Verwendung des Rendering-Systems (11);
Ermitteln (S17) von Benutzerinteraktionsdaten des ersten Benutzers (2), der mit dem Augmented-Reality-Objekt (51) interagiert, in dem Kommunikationsgerät (1);
Senden (S18) der Benutzerinteraktionsdaten von dem Kommunikationsgerät (1) an den Augmented-Reality-Interaktionsserver (5);
Empfangen (S19) eines aktualisierten Augmented-Reality-Objekts (52) vom Augmented-Reality-Interaktionsserver (5) in dem Kommunikationsgerät (1); und
Rendern (S20) des Augmented-Reality-Inhalts, der das aktualisierte Augmented-Reality-Objekt (52) umfasst, unter Verwendung des Rendering-Systems (11).

17. Ein Computerprogrammprodukt, das ein nicht-flüchtiges, computerlesbares Medium umfasst, auf dem ein Computerprogrammcode gespeichert ist, der so konfiguriert ist, dass er eine elektronische Schaltung (13) eines Kommunikationsgeräts (1) so steuert, dass das Kommunikationsgerät (1) die Schritte gemäß dem Verfahren eines der Ansprüche 9 bis 16 ausführt.

## Revendications

1. Dispositif de communication (1), comprenant un circuit électronique (13) configuré pour :
obtenir (S1) des informations de localisation (21) d'un premier utilisateur (2) du dispositif de communication (1) ;
transmettre (S2) une demande de requête via un réseau de communication (3) à un système informatisé de répertoire immobilier virtuel (4), la demande de requête comprenant au moins les informations de localisation (21) du premier utilisateur (2);
recevoir (S3) du système de répertoire immobilier virtuel (4) via le réseau de communication (3) une réponse à la requête, la réponse à la requête comprenant un ou plusieurs objets immobiliers virtuels (41) attribués à un emplacement d'objet immobilier virtuel (42) dans une région prédéfinie (R) définie par les informations de localisation du premier utilisateur (2), chacun des objets immobiliers virtuels (41) comprenant des informations d'identification (43) et une adresse réseau (44) d'un serveur d'interaction en réalité augmentée (5) ;
transmettre (S5) pour au moins un objet immobilier virtuel particulier (41) une demande d'interaction via le réseau de communication (3) au serveur d'interaction en réalité augmentée (5), en utilisant respectivement l'adresse réseau (44) du serveur d'interaction en réalité augmentée (5), chaque demande d'interaction comprenant les informations d'identification (43) de l'objet immobilier virtuel particulier (41) ;
recevoir (S6) du serveur d'interaction en réalité augmentée via le réseau de communication (3) une autorisation d'accès pour l'objet immobilier virtuel particulier (41) ;
transmettre (S7) des données du premier utilisateur à un dispositif de communication (1B) d'un deuxième utilisateur (2B), associé à l'objet immobilier virtuel particulier (41), via le serveur d'interaction en réalité augmentée (5) ; et
recevoir (S8) des données du deuxième utilisateur provenant du dispositif de communication (1B) du deuxième utilisateur (2B) via le serveur d'interaction en réalité augmentée (5).

2. Le dispositif de communication (1) selon la revendication 1, dans lequel le circuit électronique (13) est configuré pour :
transmettre un identifiant public du premier utilisateur (2) au serveur d'interaction en réalité augmentée (5) comprenant un ou plusieurs des suivants : un nom public du premier utilisateur (2) ou une clé de chiffrement du premier utilisateur (2) ; et
recevoir, depuis le serveur d'interaction en réalité augmentée (5), un identifiant public du deuxième utilisateur (2B) comprenant un ou plusieurs des suivants : un nom public du deuxième utilisateur (2B) ou une clé de chiffrement du deuxième utilisateur (2B).

3. Le dispositif de communication (1) selon la revendication 1 ou 2, dans lequel le dispositif de communication (1) comprend une ou plusieurs caméras (12) et un système de rendu (11) et dans lequel le circuit électronique (13) est configuré pour :
déterminer (S10) des données de représentation visuelle du premier utilisateur (2) à l'aide d'une ou plusieurs images du premier utilisateur (2) capturées par la ou les caméras (12) ;
transmettre (S11) les données de représentation visuelle du premier utilisateur (2), incluses dans les données du premier utilisateur, au dispositif de communication (1B) du deuxième utilisateur via le serveur d'interaction en réalité augmentée (5) ;
recevoir (S12), via le serveur d'interaction de réalité augmentée (5), à partir du dispositif de communication (1B) du deuxième utilisateur, des données de représentation visuelle du deuxième utilisateur (2B), incluses dans les données du deuxième utilisateur ; et
rendre (S13), à l'aide du système de rendu (11) et des données de représentation visuelle du deuxième utilisateur (2B), un contenu de réalité augmentée comprenant une représentation visuelle (54) du deuxième utilisateur (2B).

4. Dispositif de communication (1) selon la revendication 3, dans lequel le circuit électronique (13) est en outre configuré pour :
déterminer un champ de vision (F) du premier utilisateur (2) à l'aide d'une ou plusieurs caméras (12) ;
déterminer à partir du champ de vision (F) les coordonnées (C) des caractéristiques du monde réel dans le champ de vision (F) ; et
rendre (S13) le contenu de réalité augmentée à l'aide du système de rendu (11) de telle sorte que le contenu de réalité augmentée ait une position fixe par rapport aux coordonnées (C) des caractéristiques du monde réel.

5. Dispositif de communication (1) selon l'une des revendications 3 ou 4, dans lequel le circuit électronique (13) est en outre configuré pour :
vérifier (S221) si le contenu de réalité augmentée (51) est entièrement contenu dans un volume englobant (V) de l'objet immobilier virtuel (41) ;
en réponse à une vérification positive, rendre (S23) le contenu de réalité augmentée (51) ; et
en réponse à une vérification négative, soit :
ne pas rendre (S232) le contenu de réalité augmentée (51), ou
modifier (S222) le contenu de réalité augmentée (51) et rendre (S231) le contenu de réalité augmentée modifié s'adaptant (52) à l'intérieur du volume délimité (V) de l'objet immobilier virtuel (41).

6. Dispositif de communication (1) selon l'une des revendications 1 à 5, dans lequel le dispositif de communication (1) comprend en outre un dispositif de suivi de mouvement (16) et dans lequel le circuit électronique (13) est en outre configuré pour :
enregistrer les données de mouvement de l'utilisateur liées au mouvement corporel du premier utilisateur (2), à l'aide du dispositif de suivi de mouvement (16) ; et
transmettre les données de mouvement de l'utilisateur, incluses dans les données du premier utilisateur, au serveur d'interaction de réalité augmentée (5).

7. Dispositif de communication (1) selon l'une des revendications 1 à 6, dans lequel le dispositif de communication (1) comprend en outre un ou plusieurs microphones (15) et un ou plusieurs haut-parleurs (14) et dans lequel le circuit électronique (13) est configuré pour :
enregistrer les données audio du premier utilisateur (2) à l'aide d'un ou plusieurs microphones (15) ;
transmettre les données audio du premier utilisateur (2), incluses dans les données du premier utilisateur, au serveur d'interaction en réalité augmentée (5) ;
recevoir du dispositif de communication (1B) du deuxième utilisateur les données audio du deuxième utilisateur (2B), incluses dans les données du deuxième utilisateur ; et
lire, sur le ou les haut-parleurs (14), les données audio du deuxième utilisateur (2B).

8. Dispositif de communication (1) selon l'une des revendications 1 à 7, dans lequel le circuit électronique (13) est en outre configuré pour :
recevoir (515) un objet de réalité augmentée (52) provenant du serveur d'interaction de réalité augmentée (5) ;
rendre (S16) un contenu de réalité augmentée comprenant l'objet de réalité augmentée (52) à l'aide du système de rendu (11) ;
déterminer (S17) les données d'interaction utilisateur du premier utilisateur (2) interagissant avec l'objet de réalité augmentée (51) ;
transmettre (S18) les données d'interaction utilisateur au serveur d'interaction de réalité augmentée (5) ;
recevoir (S19) un objet de réalité augmentée mis à jour (52) provenant du serveur d'interaction de réalité augmentée (5) ; et
rendre (S20) le contenu de réalité augmentée comprenant l'objet de réalité augmentée mis à jour (52) à l'aide du système de rendu (11).

9. Procédé d'interaction en réalité augmentée pour un premier utilisateur (2) d'un dispositif de communication (1) comportant un circuit électronique, le procédé comprenant :
l'obtention (51) d'informations de localisation (21) du premier utilisateur (2) du dispositif de communication (1) ;
la transmission (S2) depuis le dispositif de communication (1) d'une requête via un réseau de communication (3) à un système informatisé de répertoire immobilier virtuel (4), la requête comprenant au moins les informations de localisation (21) du premier utilisateur (2) ;
la réception (S3) dans le dispositif de communication (1) à partir du système de répertoire immobilier virtuel (4) via le réseau de communication (3) d'une réponse à la requête, la réponse à la requête comprenant un ou plusieurs objets immobiliers virtuels (41) attribués à un emplacement d'objet immobilier virtuel (42) dans une région prédéfinie (R) définie par les informations de localisation du premier utilisateur (2), chacun des objets immobiliers virtuels (41) comprenant des informations d'identification (43) et une adresse réseau (44) d'un serveur d'interaction en réalité augmentée (5) ;
transmettre (S5) à partir du dispositif de communication (1) pour au moins un objet immobilier virtuel particulier (41) une demande d'interaction via le réseau de communication (3) au serveur d'interaction en réalité augmentée (5), en utilisant respectivement l'adresse réseau (44) du serveur d'interaction en réalité augmentée (5), chaque demande d' d'interaction comprenant les informations d'identification (43) de l'objet immobilier virtuel particulier (41) ;
recevoir (S6) dans le dispositif de communication (1) depuis le serveur d'interaction en réalité augmentée via le réseau de communication (3) une autorisation d'accès pour l'objet immobilier virtuel particulier (41) ;
transmettre (S7) depuis le dispositif de communication (1) des données du premier utilisateur à un dispositif de communication (1B) d'un deuxième utilisateur (2B), associé à l'objet immobilier virtuel particulier (41), via le serveur d'interaction en réalité augmentée (5) ; et
recevoir (S8) dans le dispositif de communication (1) des données du deuxième utilisateur provenant du dispositif de communication (1B) du deuxième utilisateur (2B) via le serveur d'interaction en réalité augmentée (5).

10. Procédé selon la revendication 9, dans lequel le procédé comprend en outre :
la transmission, depuis le dispositif de communication (1), d'un identifiant public du premier utilisateur (2) au serveur d'interaction en réalité augmentée (5), comprenant un ou plusieurs des suivants : un nom public du premier utilisateur (2) ou une clé de chiffrement du premier utilisateur (2) ; et
la réception, dans le dispositif de communication (1), à partir du serveur d'interaction en réalité augmentée (5), d'un identifiant public du deuxième utilisateur (2B) comprenant un ou plusieurs des suivants : un nom public du deuxième utilisateur (2B) ou une clé de chiffrement du deuxième utilisateur (2B).

11. Procédé selon l'une des revendications 9 ou 10, dans lequel le dispositif de communication (1) comprend une ou plusieurs caméras (12) et un système de rendu (11) et dans lequel le procédé comprend en outre :
la détermination (510) dans le dispositif de communication (1) de données de représentation visuelle du premier utilisateur (2) à l'aide d'une ou plusieurs images du premier utilisateur (2) capturées par la ou les caméras (12) ;
la transmission (S11) depuis le dispositif de communication (1) du premier utilisateur (2) des données de représentation visuelle du premier utilisateur (2), incluses dans les données du premier utilisateur, vers le dispositif de communication (1B) du deuxième utilisateur (2B) via le serveur d'interaction en réalité augmentée (5) ;
recevoir (S12) dans le dispositif de communication (1) du premier utilisateur (2), à partir du dispositif de communication (1B) du deuxième utilisateur (2B), via le serveur d'interaction en réalité augmentée (5), les données de représentation visuelle du deuxième utilisateur (2B), incluses dans les données du deuxième utilisateur ; et
rendre (S13), à l'aide du système de rendu (11) et des données de représentation visuelle du deuxième utilisateur (2B), un contenu de réalité augmentée comprenant une représentation visuelle (54) du deuxième utilisateur (2B).

12. Procédé selon la revendication 11, dans lequel le procédé comprend en outre :
la détermination, dans le dispositif de communication (1), d'un champ de vision (F) du premier utilisateur (2) à l'aide d'une ou plusieurs caméras (12) ;
déterminer, dans le dispositif de communication (1), à partir du champ de vision (F), les coordonnées (C) des caractéristiques du monde réel dans le champ de vision (F) par rapport à un emplacement (21) ; et
le rendu, à l'aide du système de rendu (11), du contenu de réalité augmentée de telle sorte que le contenu de réalité augmentée ait une position fixe par rapport aux coordonnées (C) des caractéristiques du monde réel.

13. Procédé selon la revendication 11 ou 12, dans lequel le procédé comprend en outre :
vérifier (S221), dans le dispositif de communication (1), si le contenu de réalité augmentée (51) est entièrement contenu dans un volume englobant (V) de l'objet immobilier virtuel (41) ;
en réponse à une vérification positive, le rendu (S23) du contenu de réalité augmentée (51) ; et
en réponse à une vérification négative, soit :
ne pas rendre (S232) le contenu de réalité augmentée (51), ou
modifier (S222), dans le dispositif de communication (1), le contenu de réalité augmentée (51) et rendre (S231) le contenu de réalité augmentée modifié s'adaptant (52) à l'intérieur du volume délimité (V) de l'objet immobilier virtuel (41).

14. Procédé selon l'une des revendications 9 à 13, dans lequel le dispositif de communication (1) comprend en outre un dispositif de suivi de mouvement (16) et dans lequel le procédé comprend en outre :
l'enregistrement, dans le dispositif de communication (1), des données de mouvement de l'utilisateur liées au mouvement corporel du premier utilisateur (2), à l'aide du dispositif de suivi de mouvement (16) ; et
la transmission (S8), à partir du dispositif de communication (1), des données de mouvement de l'utilisateur, incluses dans les données du premier utilisateur, au serveur d'interaction de réalité augmentée (5).

15. Procédé selon l'une des revendications 9 à 14, dans lequel le dispositif de communication (1) comprend en outre un ou plusieurs microphones (15) et un ou plusieurs haut-parleurs (14) et le procédé comprend :
enregistrer, dans le dispositif de communication (1), les données audio du premier utilisateur (2), à l'aide du ou des microphones (15) ;
transmettre (S8), à partir du dispositif de communication (1), les données audio du premier utilisateur (2), incluses dans les données du premier utilisateur, au serveur d'interaction en réalité augmentée (5) ;
la réception (S8), dans le dispositif de communication (1), à partir du dispositif de communication (1B) du deuxième utilisateur, des données audio du deuxième utilisateur (2B) incluses dans les données du deuxième utilisateur ; et
lire, sur le ou les haut-parleurs (14), les données audio du deuxième utilisateur (2B).

16. Procédé selon l'une des revendications 9 à 15, le procédé comprenant en outre :
la réception (S15), dans le dispositif de communication (1), d'un objet de réalité augmentée (52) provenant du serveur d'interaction de réalité augmentée (5) ;
le rendu (S16) du contenu de réalité augmentée comprenant l'objet de réalité augmentée (52) à l'aide du système de rendu (11) ;
déterminer (S17), dans le dispositif de communication (1), les données d'interaction utilisateur du premier utilisateur (2) interagissant avec l'objet de réalité augmentée (51) ;
transmettre (S18), à partir du dispositif de communication (1), les données d'interaction utilisateur au serveur d'interaction de réalité augmentée (5) ;
recevoir (S19), dans le dispositif de communication (1), un objet de réalité augmentée mis à jour (52) provenant du serveur d'interaction de réalité augmentée (5) ; et
rendu (S20) du contenu de réalité augmentée comprenant l'objet de réalité augmentée mis à jour (52) à l'aide du système de rendu (11).

17. Produit logiciel comprenant un support non transitoire lisible par ordinateur sur lequel est stocké un code de programme informatique configuré pour commander un circuit électronique (13) d'un dispositif de communication (1) de telle sorte que le dispositif de communication (1) exécute les étapes selon le procédé de l'une des revendications 9 à 16.
